(19) Europäisches Patentamt
European Patent Office
Office européen des brevets

(11) **EP 2 275 970 A1**

(12) **DEMANDE DE BREVET EUROPEEN**

(43) Date de publication:
**19.01.2011 Bulletin 2011/03**

(51) Int Cl.:
***G06K 9/00*** *(2006.01)*      ***B60R 1/00*** *(2006.01)*
***G01S 5/00*** *(2006.01)*      ***G06T 7/20*** *(2006.01)*

(21) Numéro de dépôt: **10168478.5**

(22) Date de dépôt: **05.07.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **06.07.2009   FR 0954632**

(71) Demandeur: **VALEO VISION**
**93012 Bobigny (FR)**

(72) Inventeurs:
• **Kuoch, Siav Kuong**
**94100, SAINT MAUR DES FOSSES (FR)**

• **Chanussot, Lowik**
**75010, PARIS (FR)**
• **Rebut, Julien**
**75019, PARIS (FR)**
• **Charpentier, Adrien**
**70180, STUTTGART (DE)**
• **Dubois, Eric**
**93110, ROSNY SOUS BOIS (FR)**
• **Fleury, Benoist**
**94300, VINCENNES (FR)**
• **Reilhac, Patrice**
**73732, ESSLINGEN (DE)**

(54)   **Procédé de détection d'un obstacle pour véhicule automobile**

(57)   La présente invention concerne un procédé de détection d'un obstacle dans un environnement d'un véhicule automobile.

Elle se **caractérise en ce que** le procédé comporte les étapes de:
- Effectuer une première détection d'obstacle par traitement d'image résultant en une définition d'au moins une région d'intérêt ;
- Classifier l'obstacle détecté avec un indice de confiance appliqué à la région d'intérêt par rapport à des caractéristiques données;
- Effectuer une deuxième détection d'obstacle par capteur(s) avec une plage de détection inférieure à un premier seuil résultant en une position déterminée ;
- Projeter la position déterminée dans un repère de référence;
- Projeter la région d'intérêt dans ledit repère de référence ;
- Mettre en correspondance les deux projections obtenues et attribuer une position déterminée à l'obstacle classifié en fonction de la mise en correspondance.

FIG.1

EP 2 275 970 A1

**Description**

La présente invention concerne un procédé de détection d'un obstacle dans un environnement d'un véhicule automobile.

Elle concerne également un dispositif de mise en oeuvre du procédé.

Elle trouve une application particulière dans le domaine des véhicules automobiles.

Dans le domaine des véhicule automobiles, un état de la technique connu de procédé de détection d'un obstacle dans un environnement d'un véhicule automobile, comporte les étapes de :

- Détection d'un piéton au moyen d'une caméra ;
- Envoi d'un signal d'alarme pour prévenir le conducteur de la présence d'un piéton.

Un inconvénient de cet état de la technique est que la position déterminée par la caméra n'est pas précise.

La présente invention a pour but un procédé de détection d'un obstacle dans un environnement d'un véhicule automobile, qui permette de détecter de manière précise la position d'un piéton.

Selon un premier objet de l'invention, ce but est atteint par un procédé de détection d'un obstacle dans un environnement d'un véhicule automobile, **caractérisé en ce qu**'il comporte les étapes de :

- Effectuer une première détection d'obstacle par traitement d'image résultant en une définition d'au moins une région d'intérêt ;
- Classifier l'obstacle détecté avec un indice de confiance appliqué à la région d'intérêt par rapport à des caractéristiques données ;
- Effectuer une deuxième détection d'obstacle par capteur(s) avec une plage de détection inférieure à un premier seuil résultant en une position déterminée ;
- Projeter la position déterminée dans un repère de référence ;
- Projeter la région d'intérêt dans ledit repère de référence ;
- Mettre en correspondance les deux projections obtenues et attribuer une position déterminée à l'obstacle classifié en fonction de la mise en correspondance.

Comme on va le voir en détail par la suite, le fait de combiner une détection par traitement d'image et une détection par capteur(s) va permettre d'effectuer une classification d'un obstacle et la mise en correspondance de ces deux détections va permettre de positionner cet obstacle classifié (en piéton) de manière plus précise.

Selon des modes de réalisation non limitatifs, le procédé de détection peut comporter en outre une ou plusieurs caractéristiques supplémentaires parmi les suivantes :

- Le repère de référence est le repère image. Cela permet de minimiser l'impact des erreurs d'estimation de distances des régions d'intérêt dans le repère véhicule.

- La première détection par traitement d'image comporte une détection par reconnaissance de forme dans une image acquise dudit environnement.

- La détection par reconnaissance de forme comporte les sous-étapes de :

  - Construire une pyramide d'images par sous échantillonnage récursif d'une image acquise ;
  - Pour chaque image sous-échantillonnée :

    - Balayer ladite image avec une vignette représentative d'un obstacle déterminé ;
    - A chaque position successive d'une vignette dans ladite image, analyser son contenu au moyen d'un ensemble de classificateurs, lesdits classificateurs étant déterminés lors d'une phase d'apprentissage préalable.

Cela permet de détecter des obstacles selon les distances de détection à laquelle ils se trouvent dans une image. Le résultat de l'application des classificateurs permet de déterminer si un obstacle se trouve dans une vignette, et donc de le détecter. Par vignette, on entend dans la présente demande une zone de détection dans l'image. Cette zone de détection est de taille et de forme déterminée. Bien entendu, il est possible de lui conférer des formes différentes. Le système selon la présente invention procède à la détection d'obstacle à l'intérieur des limites de cette vignette. Selon une variante de réalisation, la vignette est représentative de l'obstacle à détecter en ce qu'elle correspond environ à la surface qu'occupera ce type d'obstacle dans l'image. Par exemple, pour détecter un piéton, un peut prendre une forme rectangulaire dont le grand côté est vertical. Ainsi, tout piéton dont l'image sera comprise à l'intérieur de ce rectangle sera détecté.

- La détection par reconnaissance de forme comporte en outre une sous-étape supplémentaire de déterminer une zone de balayage dans une image sous-échantillonnée. Cela réduit le nombre de traitements.

- La première détection par traitement d'image comporte une détection de mouvement par rapport au véhicule sur une séquence d'images acquises dudit environnement.

- La détection de mouvement comporte les sous étapes de :

  - Construire une image d'arrière-plan recalculée pour chaque image d'une séquence d'images ;
  - Soustraire l'image d'arrière-plan à l'image courante dans la séquence d'images résultant en une image résultante ;
  - Discriminer des mouvements déterminés dans l'image résultante en fonction d'un seuil ; et
  - Extraire des deuxièmes régions d'intérêt à partir de la discrimination.

Cela permet d'obtenir les obstacles en mouvements n'appartenant pas à l'arrière-plan.

- L'étape de classification comporte les sous étapes de :

  - Créer un vecteur de caractéristiques à partir des régions d'intérêt ;
  - Classifier ledit vecteur de caractéristiques par comparaison avec une frontière de décision déterminée préalablement lors d'une étape d'apprentissage ; et
  - Déterminer un indice de confiance associé fonction de la distance du vecteur de caractéristiques par rapport à ladite frontière de décision.

Cela permet d'associer à la région d'intérêt classifiée un indice de confiance représentant la certitude d'appartenance à une classe.

- Le vecteur de caractéristiques est un histogramme des gradients orientés d'une région d'intérêt.

L'utilisation des histogrammes est simple et rapide à mettre en oeuvre

- Le procédé de détection comporte en outre une étape supplémentaire de valider la classification sur l'objet détecté par rapport à des régions d'intérêt et par rapport à des indices de confiance déterminés lors de la première détection et/ou lors de la classification.

- L'étape de validation comporte les sous-étapes de :

  - Construire une carte de probabilité correspondant à une image dans laquelle chaque région d'intérêt classifiée est représentée par une distribution de probabilité ;
  - Cumuler lesdites distributions de probabilité qui se recoupent dans la carte de probabilité de manière à obtenir un maximum local ; et
  - Valider la région d'intérêt la plus proche de chaque maximum local de la carte de probabilité.

L'utilisation d'une carte de probabilité est simple et rapide à mettre en oeuvre.
Cela permet de cumuler les probabilités sur des régions susceptibles de représenter un piéton.

- La détection par capteur(s) s'effectue au moyen de capteurs à ultrasons. On a une couverture de détection proche du véhicule.

- La détection par capteur(s) s'effectue au moyen de capteurs radars. On a une couverture de détection plus éloignée du véhicule.

- Le procédé de détection comporte en outre une étape supplémentaire d'appliquer un changement de perspective à une image acquise. Cela permet de réduire les distorsions dans l'image acquise notamment sur des obstacles qui se trouvent à la frontière d'une image.

- Le procédé de détection comporte en outre une étape supplémentaire de suivi des régions d'intérêt classifiées sur une séquence d'images acquises. Cela permet de confirmer la présence d'une dite région d'intérêt validée et de lisser sa position sur toute une séquence d'images.

Selon un deuxième objet de l'invention, elle concerne un dispositif de détection d'un obstacle dans un environnement d'un véhicule automobile, **caractérisé en ce qu**'il est apte à :

- Effectuer une première détection d'obstacle par traitement d'image résultant en une définition d'au moins une région d'intérêt ;
- Classifier l'obstacle détecté avec un indice de confiance appliqué à la région d'intérêt par rapport à des caractéristiques données ;
- Effectuer une deuxième détection d'obstacle par capteur(s) avec une plage de détection inférieure à un premier seuil résultant en une position déterminée ;
- Projeter la position déterminée dans un repère de référence ;
- Projeter la région d'intérêt dans ledit repère de référence ; et
- Mettre en correspondance les deux projections obtenues et attribuer une position déterminée à l'obstacle classifié en fonction de la mise en correspondance.

Selon un troisième objet de l'invention, elle concerne produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.
L'invention et ses différentes applications seront mieux comprises à la lecture de la description qui suit et à l'examen des figures qui l'accompagnent.
Celles-ci ne sont présentées qu'à titre indicatif et nullement limitatif de l'invention.

- la Fig. 1 est un organigramme d'un premier mode de réalisation non limitatif du procédé de détection selon l'invention ;
- les Fig. 2 et 3 illustrent schématiquement une image utilisée par une étape de changement de perspective du procédé de détection de la Fig. 1 et une image résultante ;
- la Fig. 4 est un organigramme du procédé de détection de la Fig. 1 dans lequel une étape de détection par traitement d'image selon un premier mode de réalisation non limitatif est illustrée ;
- les Fig. 5 à 11 illustrent schématiquement des images utilisées par une étape de détection par traitement d'image selon le premier mode de réalisation de la Fig. 4 ;
- la Fig. 12 illustre de façon schématique les sous-étapes d'une détection par traitement d'image selon le premier mode de réalisation de la Fig. 4 ;
- la Fig. 13 est un organigramme du procédé de détection de la Fig. 1 dans lequel une étape de détection par traitement d'image selon un deuxième mode de réalisation non limitatif est illustrée ;
- les Fig. 14 à 16 illustrent schématiquement des images utilisées par une étape de détection par traitement d'image selon le deuxième mode de réalisation de la Fig. 13 ;
- la Fig. 17 est un organigramme du procédé de détection de la Fig. 1 dans lequel une étape de détection par traitement d'image combinant le premier mode de réalisation de la Fig.4 et le deuxième mode de réalisation de la Fig. 13 ;
- la Fig. 18 est un organigramme du procédé de détection de la Fig. 1 dans lequel une étape de classification d'obstacles selon un mode de réalisation non limitatif est illustrée ;
- la Fig. 19 représente schématiquement un histogramme de gradients orientés utilisé par l'étape de classification d'obstacles de la Fig. 18 ;
- les Fig. 20 et 21 sont des schémas de répartition d'indice de confiance explicatifs d'un mode de réalisation non limitatif de l'étape de classification d'obstacles de la Fig. 18 ;
- la Fig. 22 est un organigramme du procédé de détection de la Fig. 1 dans lequel une étape de détection par capteurs selon un premier mode de réalisation non limitatif est illustrée ;
- la Fig. 23 illustre schématiquement un véhicule comportant un dispositif d'acquisition d'image utilisé par le procédé de détection de la Fig. 1 et une zone de détection dudit dispositif d'acquisition ;
- la Fig. 24 illustre schématiquement un véhicule comportant un dispositif de détection par capteurs à ultrasons selon le premier mode de réalisation non limitatif de la Fig. 22 et une zone de détection dudit dispositif de détection ;
- la Fig. 25 illustre schématiquement un véhicule comportant un dispositif d'acquisition d'image de la Fig. 23 et un dispositif de détection par capteurs à ultrasons de la Fig. 24 ainsi que leur zone de détection respective ;
- la Fig. 26 est un organigramme du procédé de détection de la Fig. 1 dans lequel une étape de détection par capteurs selon un deuxième mode de réalisation non limitatif est illustrée ;
- la Fig. 27 illustre schématiquement un véhicule comportant un dispositif de détection par capteurs radars selon le deuxième mode de réalisation non limitatif de la Fig. 26 et une zone de détection dudit dispositif de détection ;

- la Fig. 28 illustre schématiquement un véhicule comportant un dispositif d'acquisition d'image de la Fig. 23 et un dispositif de détection par capteurs radars de la Fig. 27 ainsi que leur zone de détection respective ;
- la Fig. 29 est un organigramme du procédé de détection de la Fig. 1 dans lequel une étape de détection par capteurs combinant le premier mode de réalisation de la Fig. 24 et le deuxième mode de réalisation de la Fig. 26 est illustrée ;
- la Fig. 30 illustre schématiquement un véhicule comportant un dispositif d'acquisition d'image de la Fig. 23, un dispositif de détection par capteurs à ultrasons de la Fig. 24 et un dispositif de détection par capteurs radars de la Fig. 26 ainsi que leur zone de détection respective ;
- La Fig. 31 illustre un obstacle ainsi que des paramètres relatifs à sa position et détectés par un dispositif de détection par capteurs à ultrasons de la Fig. 24 et par un dispositif de détection par capteurs radars de la Fig. 26 ;
- La Fig. 32 illustre le procédé de la Fig. 1 comprenant :

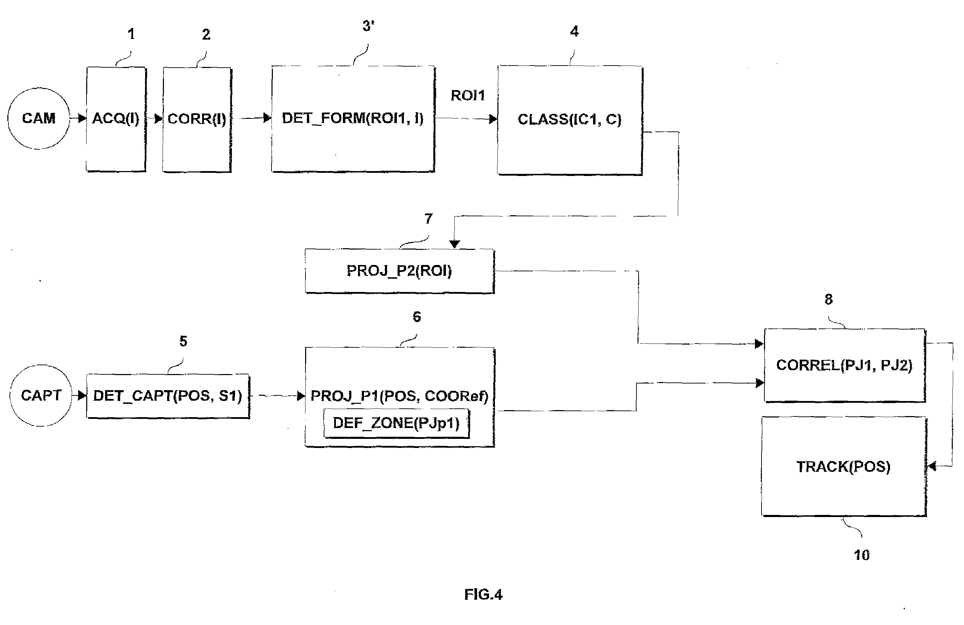

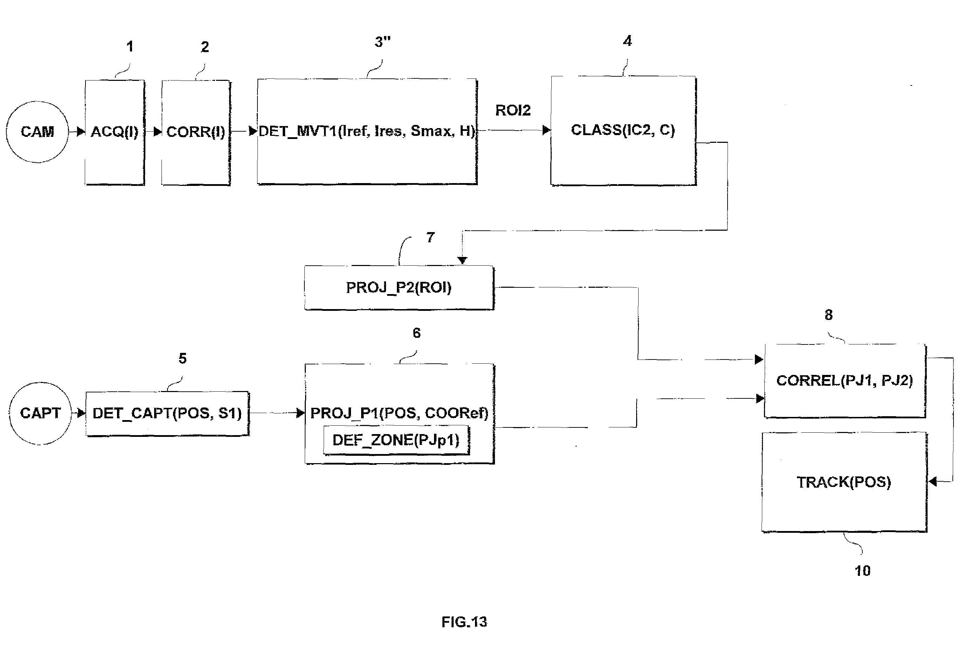

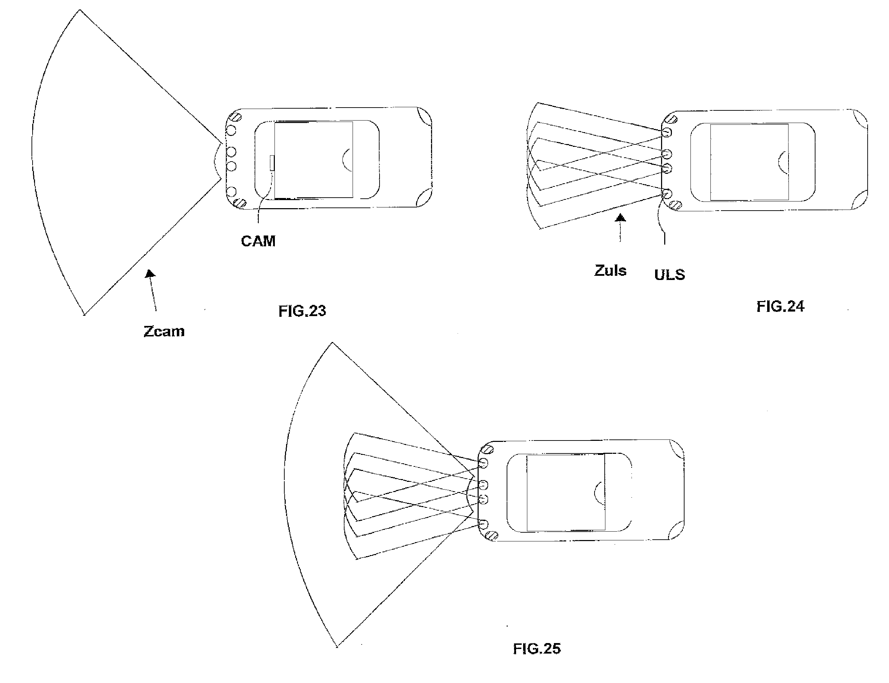

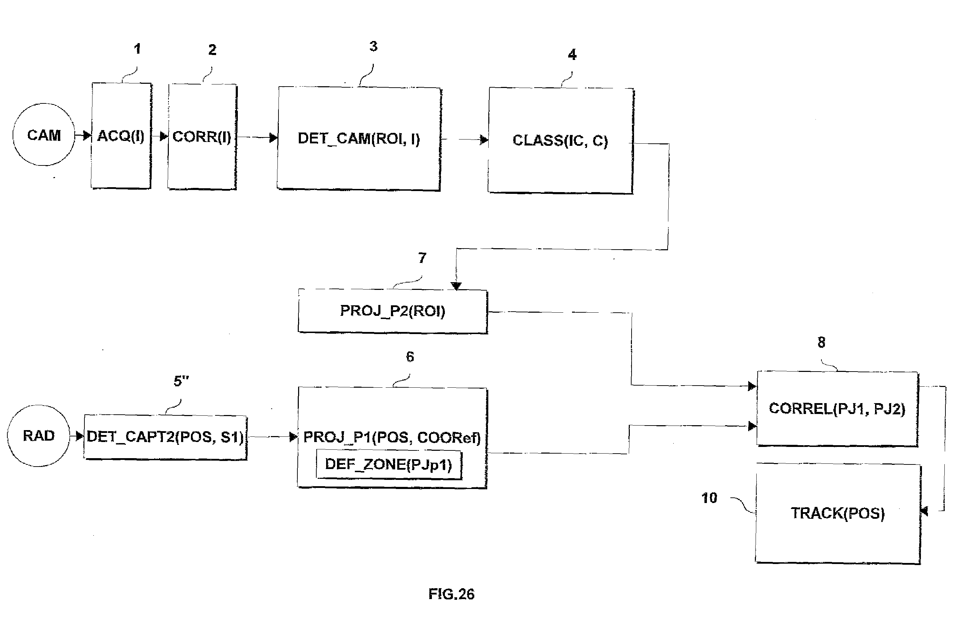

  - une étape de détection par traitement d'image combinant une détection par reconnaissance de forme selon le premier mode de réalisation de la Fig. 4 et une détection de mouvement de la Fig. 13 ;
  - une étape de détection par capteurs combinant une détection par capteurs à ultrasons selon le premier mode de réalisation de la Fig. 24 et une détection par capteurs radars selon le deuxième mode de réalisation de la Fig. 26 ;

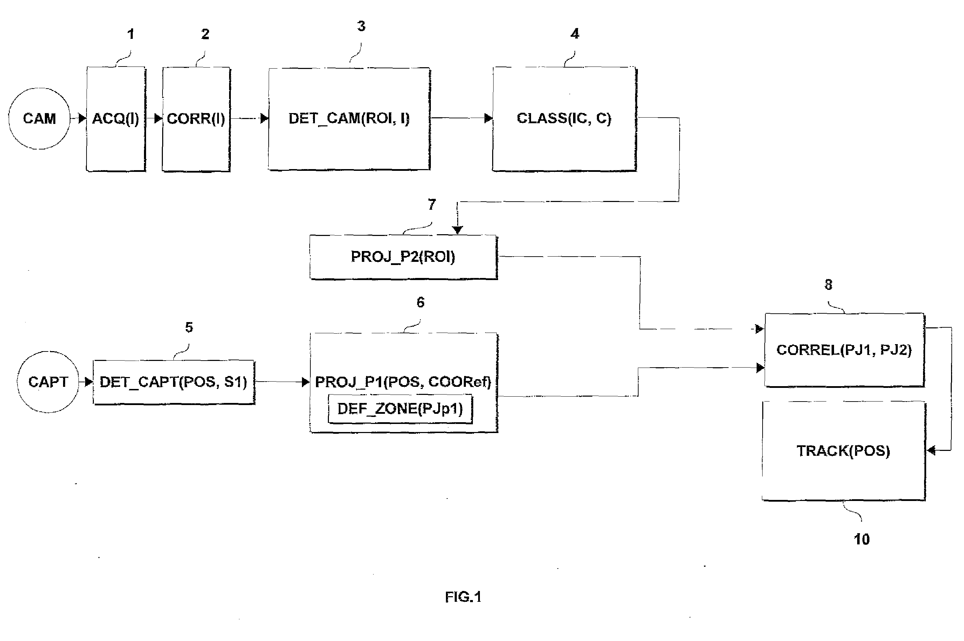

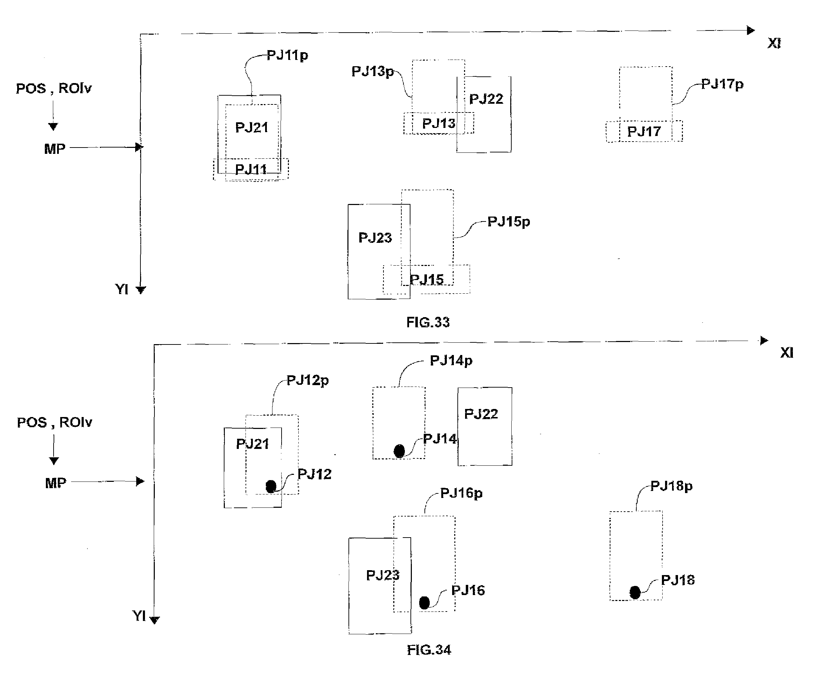

- Les Fig. 33 et 34 sont des schémas explicatifs de projections dans un repère de référence de positions et de régions d'intérêt relatifs à des détections d'obstacles, lesdites projections résultant d'une étape de projection du procédé de détection de la Fig. 1 ;

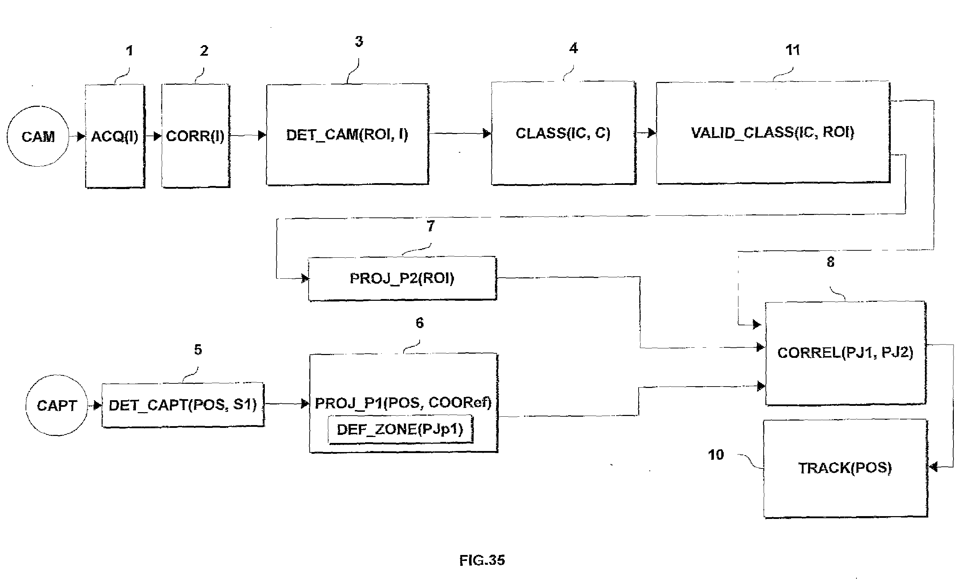

- la Fig. 35 est un organigramme d'un deuxième mode de réalisation non limitatif du procédé de détection selon l'invention comprenant une étape de validation ;

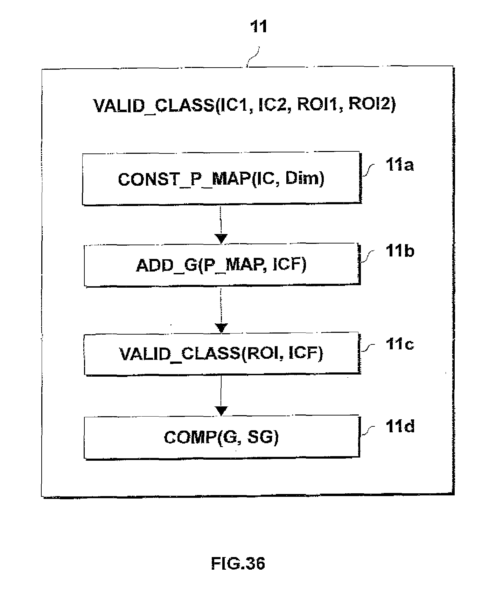

- la Fig. 36 est un organigramme d'un mode de réalisation non limitatif d'une étape de validation du procédé de détection de la Fig.35 ;

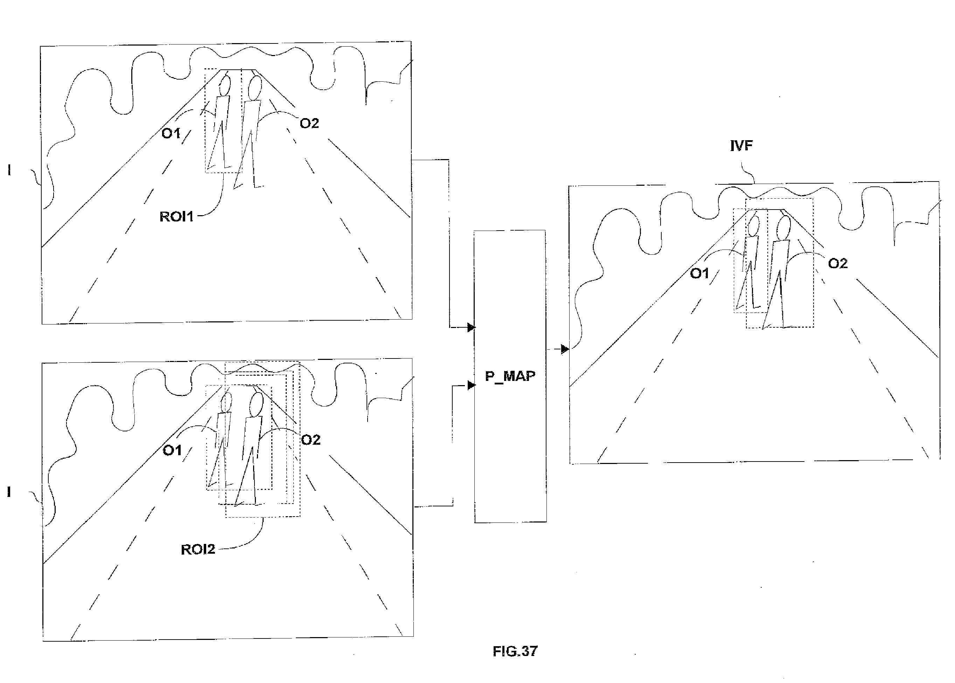

- la Fig. 37 est un schéma explicatif d'un mode de réalisation non limitatif de l'étape de validation de la Fig. 36 ;

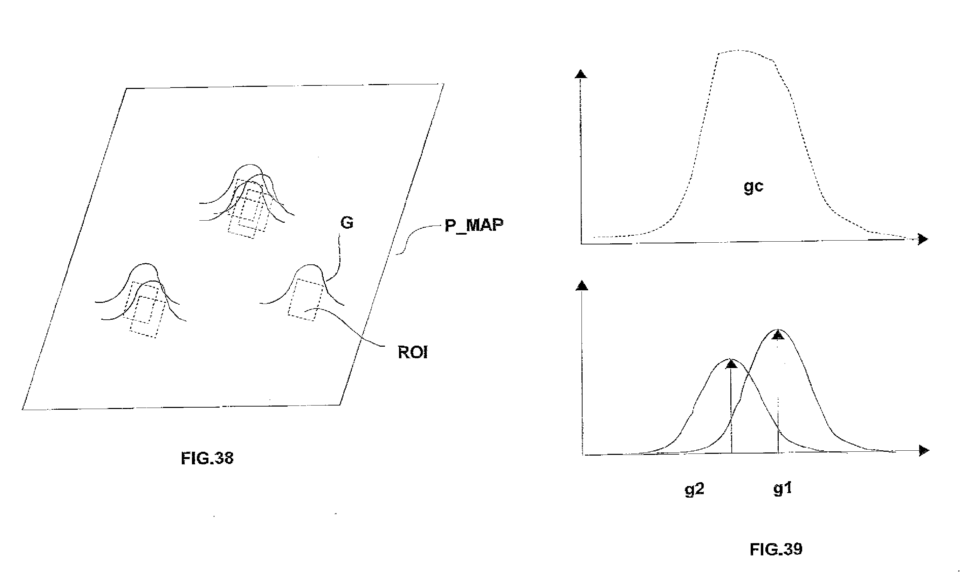

- la Fig. 38 est une représentation schématique en 3D de fonctions gaussiennes expliquant leur utilisation dans l'étape de validation de la Fig. 36 ;
- la Fig. 39 est une représentation schématique en 2D de fonctions gaussiennes expliquant leur utilisation dans l'étape de validation de la Fig. 36 ;

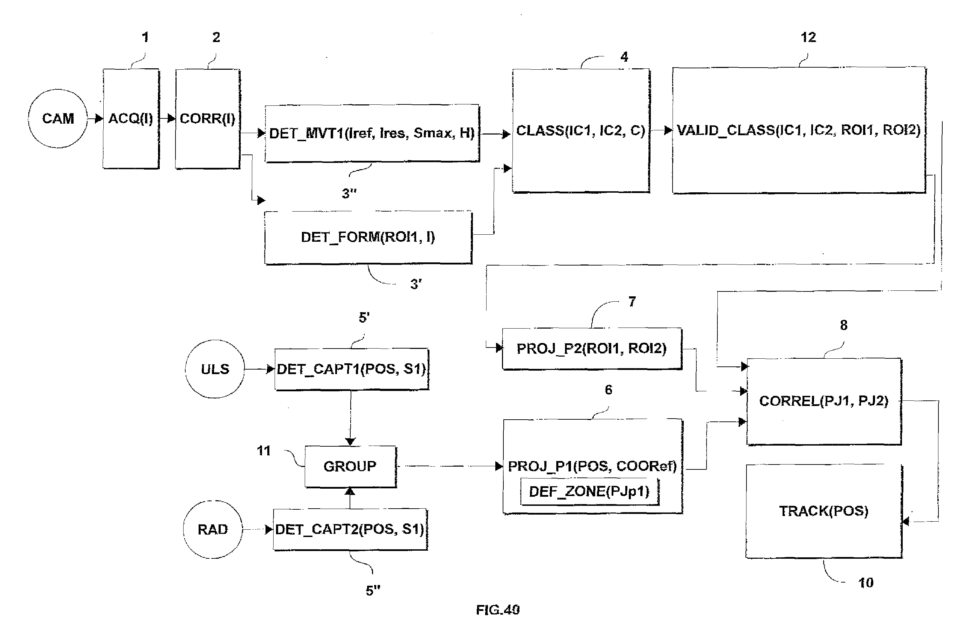

- La Fig. 40 illustre le procédé de la Fig. 35 comprenant :

  - une étape de détection par traitement d'image combinant une détection par reconnaissance de forme selon le premier mode de réalisation de la Fig. 4 et une détection de mouvement de la Fig. 13 ;
  - une étape de détection par capteurs combinant une détection par capteurs à ultrasons selon le premier mode de réalisation de la Fig. 24 et une détection par capteurs radars selon le deuxième mode de réalisation de la Fig. 26 ; et

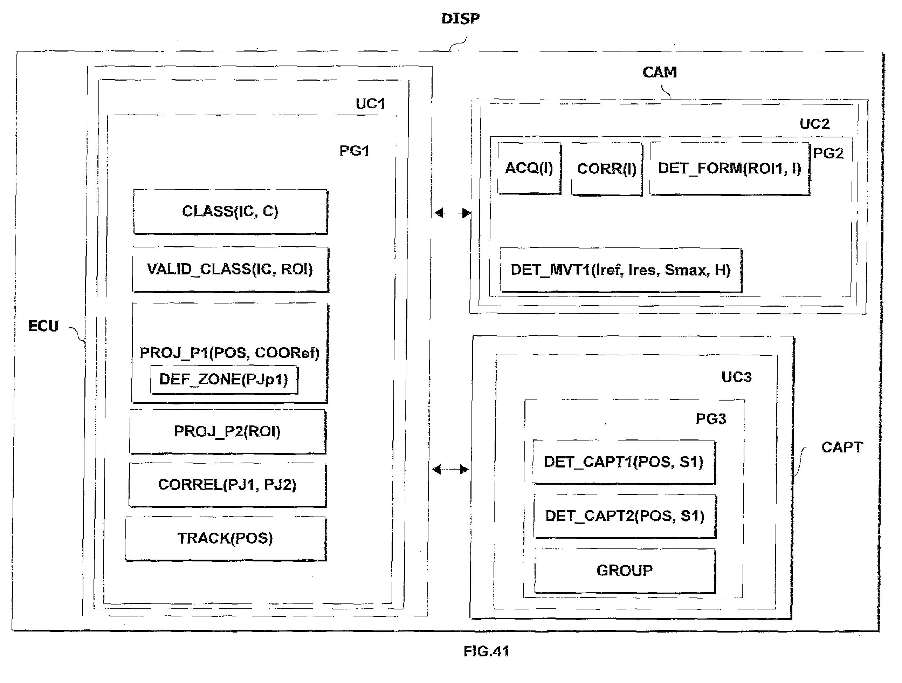

- la Fig. 41 est un bloc diagramme fonctionnel d'un mode de réalisation non limitatif d'une architecture d'un dispositif de détection de mise en oeuvre du procédé des Fig. 1 et 35.

Dans toutes les figures, les éléments communs portent les mêmes numéros de référence.

Le procédé de détection d'un obstacle dans un environnement d'un véhicule automobile selon l'invention est décrit dans un premier mode de réalisation non limitatif à la Fig. 1.

On notera que par véhicule automobile, on entend tout type de véhicule motorisé.

A. Premier mode de réalisation

Selon ce premier mode de réalisation, le procédé de détection comporte les étapes suivantes telles qu'illustrées à la Fig. 1 :

- Effectuer une première détection d'obstacle O par traitement d'image résultant en une définition d'au moins une région d'intérêt ROI (étape DET_CAM(ROI, I));
- Classifier l'obstacle détecté O avec un indice de confiance IC appliqué à la région d'intérêt ROI par rapport à des caractéristiques données C (étape CLASS(IC, C)) ;
- Effectuer une deuxième détection d'obstacle O par capteur(s) avec une plage de détection inférieure à un premier seuil S1 résultant en une position déterminée POS (étape DET_CAPT(POS, S1)) ;
- Projeter la position déterminée POS dans un repère de référence COORef (étape (PROJ_P1(POS, COORef)) ;
- Projeter la région d'intérêt ROI dans ledit repère de référence COORef (étape PROJ_P2(ROI)) ; et

- Mettre en correspondance les deux projections obtenues PJ1, PJ2 et attribuer une position déterminée POS à l'obstacle classifié O en fonction de la mise en correspondance (étape CORREL(PJ1, PJ2)).

Dans un mode de réalisation non limitatif, le procédé de détection comporte en outre une étape supplémentaire d'appliquer un changement de perspective à une image acquise (étape CORR(I)).

Dans un mode de réalisation non limitatif, le procédé de détection comporte en outre une étape d'acquisition d'une séquence SQ d'images 1 (étape ACQ(I)). On notera que cette étape peut être effectuée en amont par un autre procédé.

Dans un mode de réalisation non limitatif, le procédé de détection comporte en outre une étape supplémentaire de suivi des régions d'intérêt validées sur une séquence d'images acquises. (étape TRACK(POS)). Cela permet de confirmer la présence d'une dite région d'intérêt classifiée et de lisser sa position sur toute une séquence SQ d'images I.

Pour la suite de la description, dans le mode de réalisation non limitatif du procédé décrit, le procédé comprend ces étapes supplémentaires d'acquisition d'images, de changement de perspective et de suivi d'une détection.

Les étapes du procédé sont décrites en détail ci-après.

**Dans une première étape 1),** on acquière une séquence SQ d'images I de l'environnement E d'un véhicule V (étape ACQ(I)).

L'acquisition se fait au moyen d'une caméra CAM.

Les méthodes d'acquisition d'images étant connues de l'homme du métier, elles ne sont pas décrites ici.

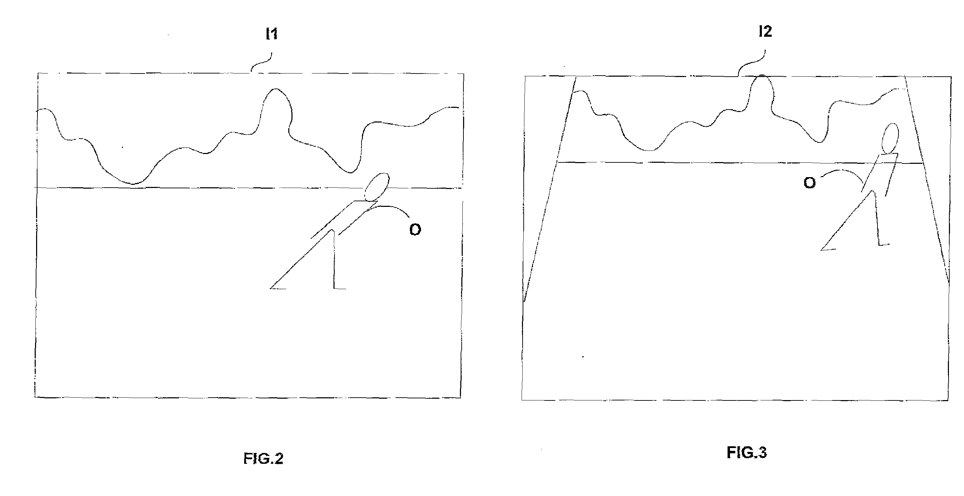

**Dans une deuxième étape 2),** on applique un changement de perspective à une image acquise I (étape CORR(I)). Cela permet de contrebalancer les distorsions dues à la caméra CAM. On redresse ainsi les obstacles O qui se trouvent en bordure d'image I. Tel qu'illustré dans un exemple schématique à la Fig. 2 et la Fig. 3, à partir d'une image acquise 11, on obtient une correction d'image résultant en une image acquise 12.

**Dans une troisième étape 3),** On effectue une première détection d'obstacle O par traitement d'image résultant en une définition d'au moins une région d'intérêt ROI (étape DET_CAM(ROI,I)).

1. <u>Premier mode de réalisation</u>

Dans un premier mode de réalisation non limitatif, la première détection par traitement d'image comporte une détection par reconnaissance de forme dans une image acquise dudit environnement E (étape DET_FORM(ROI1, I) illustré sur la Fig. 4.

Dans un mode de réalisation, la première détection par reconnaissance de forme utilise une méthode bien connue de l'homme du métier appelée « AdaBoost » et décrite dans le document « an introduction to Boosting and Leveraging by Ron Meir and Gunnar Rätsch - Departement of Electrical Engineering, Technion, Haifa 32000 Israel / research School of Information Science & Engineering - the australian National University, Canberra, ACT 0200, Australia ».

Cette méthode se base sur :

- une étape initiale d'apprentissage qui utilise :
- une reconnaissance de forme au moyen d'une série de vignettes VIGN de référence de taille déterminée Sz. Dans l'exemple présent, on se base sur une vignette VIGN représentative d'un obstacle O qui est un piéton. Ainsi, dans un exemple non limitatif, la vignette VIGN comporte une taille Sz de 48*24 pixels Px. La série de vignettes comprend un ensemble de vignettes dites positives dans lesquelles un piéton est présent, et un ensemble de vignettes dites négatives dans lesquelles aucun piéton n'est présent ; et
- un algorithme génétique (appelé « genetic algorithm » en anglais) qui permet d'obtenir un ensemble de classificateurs forts CLs (appelés « strong classifier » en anglais), un classificateur fort CLs comprenant une somme d'une pluralité de classificateurs faibles CLw (appelés « weak classifier » en anglais). L'obtention des classificateurs faibles CLw et forts CLs est basée sur une comparaison pixel à pixel dans la série de vignettes VIGN de référence.

A chaque classificateur fort CLs est associé un poids qui est représentatif d'un taux de bonnes détections d'un obstacle par rapport la série de vignette VIGN pour une pluralité de classificateurs faibles donnée.

Un classificateur faible CLw se compose d'un test unitaire relatif à une comparaison d'un pixel par rapport à un autre pixel dans la même vignette. Un poids lui est également associé.

L'algorithme génétique permet de calculer des combinaisons de classificateurs faibles CLw appliqués à la série de vignette VIGN de référence qui permettent d'atteindre le taux de bonnes détections associées aux classificateurs fort CLs.

On notera que cette étape d'apprentissage peut être effectuée en amont du procédé de détection décrit.

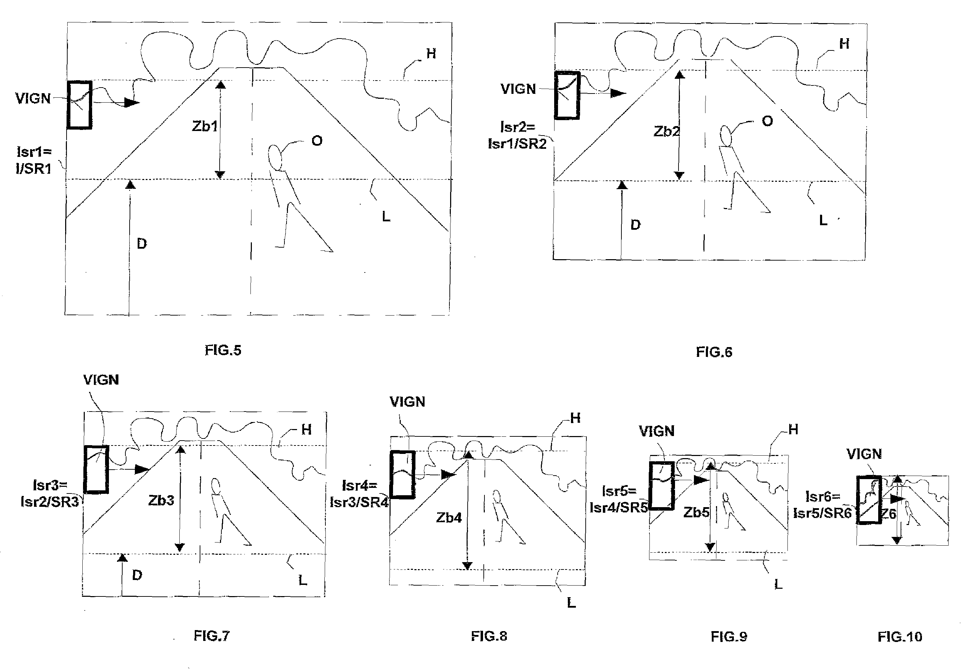

- Une utilisation de la méthode « AdaBoost » comporte les étapes suivantes, telle qu'illustrée sur les Fig. 5 à 12.

    a) Construire une pyramide d'images Isr par sous échantillonnage récursif d'une image acquise I.

En pratique, on applique une échelle de réduction SR résultant en une image sous-échantillonnée Isr, telle qu'illustrée sur la Fig. 9 et pour sur cette image on applique de nouveau une échelle de réduction SR et ainsi de suite.

Dans un mode de réalisation non limitatif, à chaque itération a), une échelle de réduction SR différente est utilisée, telle qu'illustrée sur les Figs. 5 à 10. Cela permet d'adapter les distances de détection d'un obstacle O que l'on veut atteindre et donc d'atteindre les obstacles qui se trouvent à différentes distances dans l'image I.

Ainsi, dans des exemples non limitatifs illustrés en figures 5 à 10 :

- pour l'image acquise I, l'échelle de réduction appliquée SR1 est de 1,2, résultant en la première image sous-échantillonnée Isr1 ;
- pour l'image sous-échantillonnée Isr1, l'échelle de réduction appliquée SR2 est de 2, résultant en une deuxième image sous-échantillonnée Isr2 ;
- pour l'image sous-échantillonnée Isr2, l'échelle de réduction appliquée SR3 est de 2,3 résultant en une troisième image sous-échantillonnée Isr3 ;
- pour l'image sous-échantillonnée Isr3, l'échelle de réduction appliquée SR4 est de 3, résultant en une deuxième image sous-échantillonnée Isr4 ;
- pour l'image sous-échantillonnée Isr4, l'échelle de réduction appliquée SR5 est de 4, résultant en une cinquième image sous-échantillonnée Isr5 ;
- pour l'image sous-échantillonnée Isr5, l'échelle de réduction appliquée SR6 est de 5, résultant en une sixième image sous-échantillonnée Isr6.

On notera qu'une échelle de réduction SR est prise en fonction de la distance à laquelle on veut détecter un obstacle O dans une image acquise 1 ou réduite Isr.

Les exemples non limitatifs donnés ci-dessus permettent d'effectuer une détection d'un obstacle O entre 0 et 9 mètres à partir du véhicule V considéré.

b) Pour chaque image sous-échantillonnée Isr :

- On balaye ladite image Isr avec une vignette VIGN représentative d'un obstacle déterminé O, ici un piéton. La vignette VGN a une taille déterminée Sz représentative du piéton. Dans un exemple non limitatif, le balayage s'effectue de gauche à droite et de haut en bas.
- A chaque position successive d'une vignette VIGN dans ladite image Isr, on analyse son contenu au moyen d'un ensemble de classificateurs Cls, Clw, lesdits classificateurs étant déterminés lors d'une phase d'apprentissage préalable, tel que décrite précédemment.

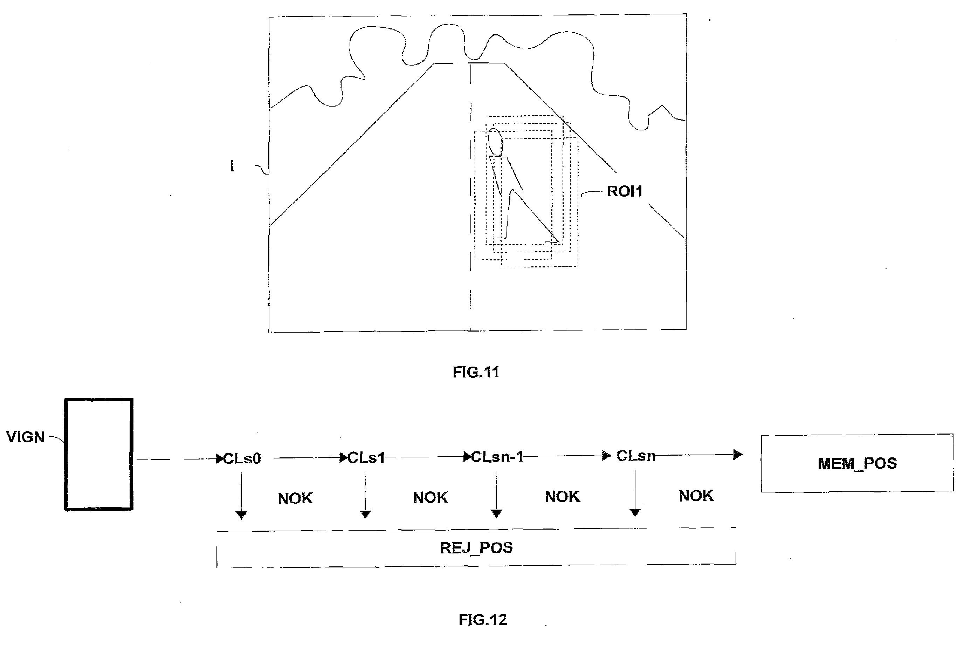

Ainsi, lors du balayage, pour chaque position POS de la vignette dans une image Isr, on effectue les sous-étapes suivantes illustrées à la Fig.12 (représentatives de l'utilisation de la méthode « AdaBoost»).

i) On applique la combinaison des classificateurs faibles CLw d'un premier classificateur fort CLs0 sur ladite vignette VIGN à la position courante POS ;
On cumule les poids des classificateurs faibles CLw dont les tests unitaires associés sont validés, i.e. positifs ;
On compare le cumul avec le poids du classificateur fort CLs0.
ii) Si le résultat est négatif (c'est-à-dire que le cumul est inférieur au poids du classificateur fort CLs0), on rejette la position POS de la vignette VIGN (étape REJ_POS). Cela signifie que la vignette VIGN à la position courante ne comporte aucun obstacle O qui est ici un piéton. On passe à la position suivante POS de la vignette.
iii) Si le résultat est positif (c'est-à-dire que le cumul est supérieur au poids du classificateur fort CLs0), on applique le classificateur fort CLs1 suivant et on réitère l'étape i). Tant que le résultat est positif, on passe au classificateur fort suivant CLsn.
Lorsque tous les classificateurs forts CLs ont donné un résultat positif, cela signifie que la vignette VIGN à la position courante comporte un obstacle O qui est ici un piéton. Dans ce cas, on mémorise la position POS de la vignette VIGN (étape MEM_POS illustrée) et on passe à la position suivante de la vignette VIGN.

On réitère les étapes i) à iii) pour chaque position POS d'une vignette VIGN dans l'image Isr.
On obtient ainsi, le cas échéant, pour l'image sous-échantillonnée Isr un ensemble de positions POS mémorisées.
Ainsi, on obtient un ensemble de positions POS mémorisées d'une vignette VIGN dans chaque image acquise ou sous-échantillonnée. Chaque position mémorisée POS d'une vignette VIGN représente ainsi une première région d'intérêt ROI1.
Sur les figures 5 à 10, la vignette est délimitée par un rectangle. Bien entendu, il est possible de lui conférer des formes différentes.

On notera que plus on augmente la valeur d'une échelle de réduction SR, plus on détecte des obstacles, ici des piétons, qui sont proches du véhicule V.

Ainsi, pour la première image sous-échantillonnée Isr1, ce sont les obstacles lointains (qui entrent dans la vignette VIGN) qui seront détectés, tandis que dans l'image Isr5 et l'image Isr6, ce sont les obstacles proches (qui entrent dans la vignette VIGN) qui seront détectés. Sur l'exemple non limitatif des Fig. 5 à 10, on peut voir que le piéton O représenté sera détecté uniquement dans l'image Isr5 et l'image Isr6, car dans ces deux images, il sera compris dans la vignette VIGN.

On notera que dans un autre mode de réalisation, on peut alterner la sous-étape de sous-échantillonnage avec la sous-étape de balayage et d'analyse.

c) Cet ensemble de premières régions d'intérêt ROI1 est repositionné dans l'image acquise I initiale, tel qu'illustré sur la Fig. 11 en multipliant lesdites premières régions d'intérêt ROI1 par l'échelle de réduction SR associée à l'image à partir desquelles elles ont été calculées.

Dans un mode de réalisation non limitatif, la première détection par reconnaissance de forme comporte une sous-étape de déterminer une zone de balayage Zb dans une image sous-échantillonnée générée à partir d'une image acquise I dans laquelle un obstacle O peut être détecté au moyen d'une vignette VIGN. Cette sous-étape est appliquée pour chaque image sous-échantillonnée Isr2 à Isr6 également. Cela permet de réduire le temps de traitement. En effet, on évite ainsi de balayer des endroits dans une image I où l'on sait que l'on ne pourra pas détecter un obstacle O dans une vignette VIGN car :

- l'obstacle O est plus grand que ladite vignette VIGN ;
- l'obstacle O ne pourra se trouver dans une partie de l'image en dehors de la zone, ladite partie représentant le ciel.

Ainsi, dans un mode de réalisation non limitatif, la zone de balayage Zb comporte :

- une ligne supérieure H délimitant une frontière au-delà de laquelle aucun obstacle O ne peut être détecté dans l'image au moyen d'une vignette VIGN ; et
- une ligne inférieure L délimitant une frontière au-delà de laquelle aucun obstacle O ne peut être détecté dans l'image au moyen de la vignette VIGN.

Comme on peut le voir sur les Fig. 5 à 10, on a déterminé les zones de balayage Zb1, Zb2, Zb3, Zb4, Zb5 et Z6 (représentées par deux lignes horizontales en pointillés) respectivement pour les images réduites Isr1, Isr2, Isr3, Isr4, Isr5 et Isr6.

Dans des exemples non limitatifs :

- dans l'image sous-échantillonnée Isr1, la ligne inférieure de la zone de balayage Zb1 a été placée à une distance D de 10 mètres,
- dans l'image sous-échantillonnée Isr2, la ligne inférieure de la zone de balayage Zb2 a été placée à une distance D de 6 mètres,
- dans l'image sous-échantillonnée Isr3, la ligne inférieure de la zone de balayage Zb3 a été placée à une distance D de 3,5 mètres,
- dans l'image sous-échantillonnée Isr4, la ligne inférieure de la zone de balayage Zb4 a été placée à une distance D de 2 mètres,
- dans l'image sous-échantillonnée Isr5, la ligne inférieure de la zone de balayage Zb5 a été placée à une distance D de 1 mètre,
- dans l'image sous-échantillonnée Isr6, la ligne inférieure de la zone de balayage Z6 a été placée à la frontière inférieure de l'image Isr6.

2. Deuxième mode de réalisation

Dans un deuxième mode de réalisation non limitatif, la première détection par traitement d'image comporte une détection de mouvement par rapport au véhicule V sur une séquence SQ d'images acquises I dudit environnement E.

Dans une variante de réalisation non limitative, la première détection de mouvement (étape DET_MVT1(Iref, Ires, Smax, H) illustré à la Fig. 13) comporte les sous-étapes suivantes.

a) Construire une image d'arrière-plan Iref recalculée pour chaque image 1 d'une séquence d'image SQ.

Dans un mode de réalisation non limitatif, cette étape utilise une méthode bien connue de l'homme du métier appelée « Running Average Method » et décrite dans le document G. Christogiannopoulos, P. B. Birch, R. C. D. Young, C. R. Young, "Segmentation of moving objects from cluttered background scenes using a running average model". SPIE Journal, vol 5822, pp. 13-20. 2005. Cette méthode est également appelée « Background removal » en anglais.

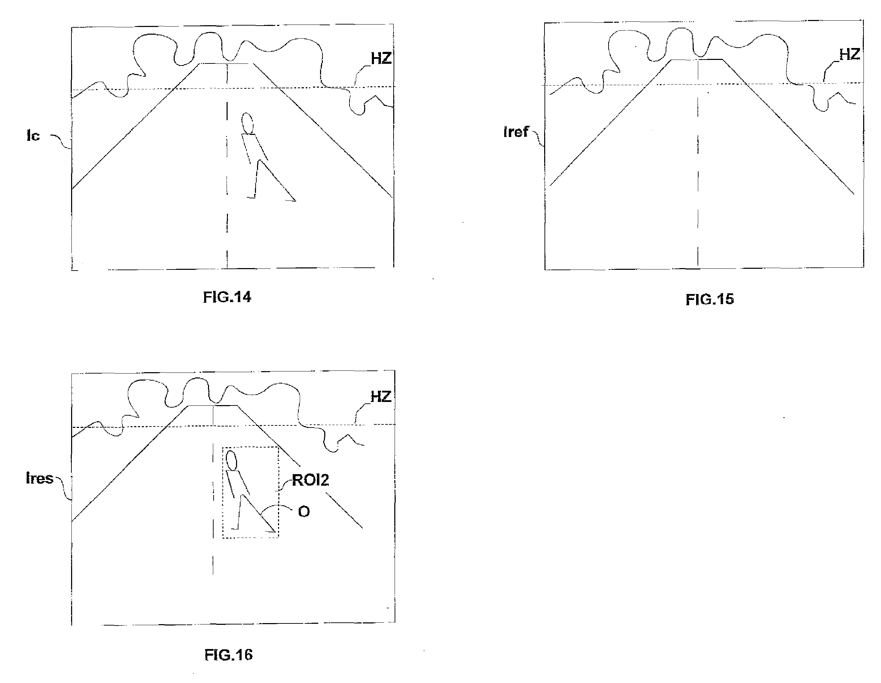

Ainsi, tel qu'illustré sur l'exemple non limitatif des Fig. 14 à 16, dans un mode de réalisation non limitatif, pour chaque image acquise courante Ic (d'une séquence d'images SQ) dans lequel se trouve au moins un obstacle O, ici un piéton, on calcule une image de référence Iref telle que :

$$Iref = \alpha * Ic + (1-\alpha)*Iref.$$

Avec $\alpha$ un pourcentage d'apprentissage.

Dans un exemple non limitatif, $\alpha = 0.05$

Ce pourcentage d'apprentissage signifie que l'on garde 5% de la nouvelle image Ic et 95% de l'image précédente Iref. Autrement dit, l'arrière-plan évolue en fonction du mouvement des objets (comportant les obstacles) dans l'image.

On notera que la première image de référence Iref est la première image acquise I dans la séquence acquise SQ.

b) Soustraire l'image d'arrière-plan Iref à l'image courante Ic dans la séquence d'image SQ résultant en une image résultante Ires.

Après l'obtention de l'image d'arrière-plan Iref, on soustrait donc la première image acquise Ic à cette image d'arrière-plan Iref et on obtient une image résultante Ires.

On a ainsi Ires = Valeur absolue (Ic-Iref).

On effectue cette étape sur l'ensemble des images acquises I de la séquence d'images SQ.

c) Discriminer des mouvements déterminés dans l'image résultante Ires en fonction d'un seuil Smax.

Dans une variante de réalisation non limitative, on compare l'intensité de chaque pixel de l'image résultante Ires avec ledit seuil Smax. Si l'intensité est supérieure au seuil Smax, cela signifie qu'il existe du mouvement dans l'image résultante Ires.

d) Extraire des deuxièmes régions d'intérêt ROI2 à partir de la discrimination.

A cet effet, dans une variante de réalisation non limitative, on binarise l'image résultante de la manière suivante :

On compare tous les pixels Px d'une image résultante Ires à un seuil d'intensité maximum Sbr représentatif du bruit BR.

- Si la valeur d'un pixel Px est inférieure à ce seuil d'intensité Sbr, on positionne sa valeur à zéro (noir) dans un exemple non limitatif,
- Sinon on positionne sa valeur à 255 (blanc) dans un exemple non limitatif.

Dans un exemple non limitatif, afin de définir le seuil d'intensité Sbr :

- on extrait de chaque image résultante Ires la valeur maximale d'intensité de niveaux de gris.
- on établit la valeur du seuil d'intensité Sbr égale à un pourcentage de cette valeur maximale, le pourcentage étant représentatif du bruit BR.

Dans un exemple non limitatif, le pourcentage est de 20%.

Ainsi, en effectuant une binarisation de l'image résultante Ires, on fait disparaître le bruit BR et on fait apparaître des deuxièmes régions d'intérêt ROI2 représentatives d'un obstacle O en mouvement.

On distingue ainsi un obstacle O en mouvement du bruit.

On notera que le bruit BR peut être par exemple l'ombre au sol d'un arbre qui bouge en raison du vent ou encore un changement d'intensité lumineuse sur l'image due par exemple à des nuages en mouvement.

Dans un mode de réalisation non limitatif, la deuxième détection DET_MVT1 comporte en outre les étapes suivantes.

a) Regrouper les régions d'intérêt RO12 de chaque image résultante Ires qui se recoupent entre elles. Les régions d'intérêt RO12 qui se recoupent entre elles sont en effet représentatives d'un même obstacle O.

b) Définir des rectangles autour de ces deuxièmes régions d'intérêt RO12 obtenues, ces rectangles définissant maintenant lesdites deuxièmes régions d'intérêt RO12.

Dans un mode de réalisation non limitatif, pour déterminer le rectangle, on prend les extrémités minimum et maximum d'une région d'intérêt RO12.

Dans un mode de réalisation non limitative, les régions d'intérêt RO12 qui sont situées au dessus d'une ligne caractéristique de l'horizon HZ (illustrée sur les Fig. 14 à 16) dans une image acquise I ne sont pas prises en compte. En effet, on sait qu'un obstacle tel qu'un piéton ne peut se trouver au dessus de la ligne d'horizon HZ, c'est-à-dire dans le ciel. Cela permet de réduire le nombre de calculs à effectuer.

3. Troisième mode de réalisation

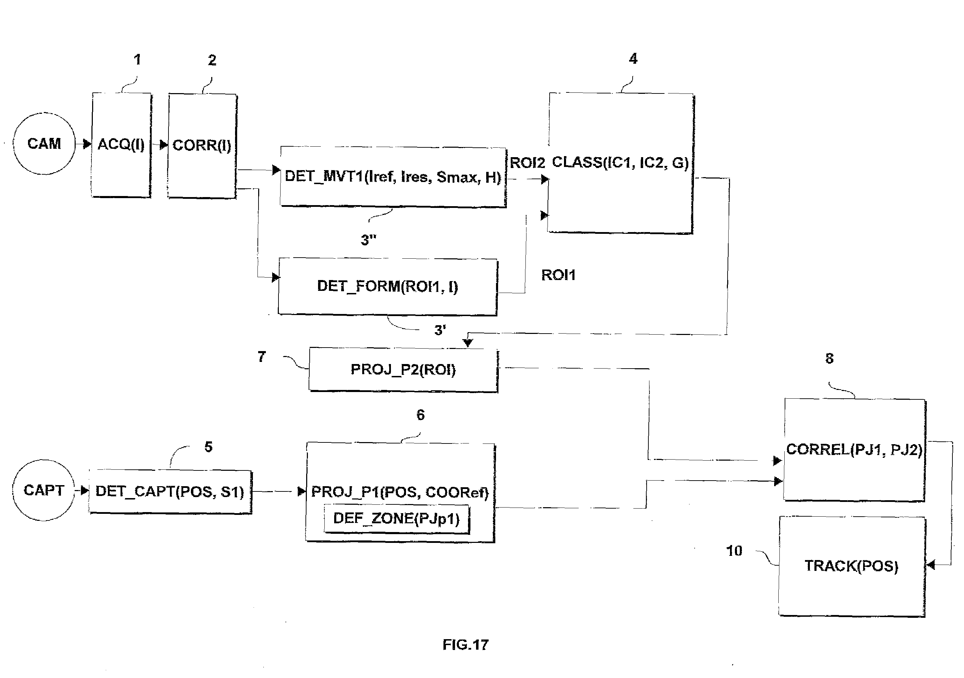

Dans un troisième mode de réalisation non limitatif tel qu'illustré sur la Fig. 17, la première détection par traitement d'image est une combinaison de :

-   une détection par reconnaissance de forme dans une image acquise dudit environnement E selon le premier mode de réalisation ; et
-   une détection de mouvement par rapport au véhicule V sur une séquence SQ d'images acquises I dudit environnement E.

On obtient ainsi des premières régions d'intérêt ROI1 et des deuxièmes régions d'intérêt ROI2.

**Dans une quatrième étape 4),** on classifie l'obstacle O détecté avec respectivement un indice de confiance IC appliqué à la région d'intérêt par rapport à des caractéristiques données C (étape CLASS(IC, C)).

On rappelle que les régions d'intérêt ROI1, ROI2 sont les régions déterminées lors de l'étape 3.

On remarquera que préalablement à cette étape de classification, on détermine deux types de populations dont une est représentative d'un piéton de la manière suivante. On notera que cette détermination est en général effectuée en amont du procédé de détection décrit.

A partir d'une pluralité de M vignettes de référence VIGNref dont une partie comprend un obstacle tel qu'un piéton et une partie ne comprend pas d'obstacle, on construit des histogrammes de référence HISTREF à partir de l'orientation des contours détectés dans lesdites vignettes (sous-étape CONST_HISTREF(VIGNref)).

Ainsi, dans un mode de réalisation non limitatif, les caractéristiques données sont des histogrammes de gradients orientés. Dans un exemple non limitatif, neuf orientations sont utilisées (correspondant à neuf directions sur 360°). Cela permet d'obtenir un bon compromis entre le temps de calcul et la qualité de la classification.

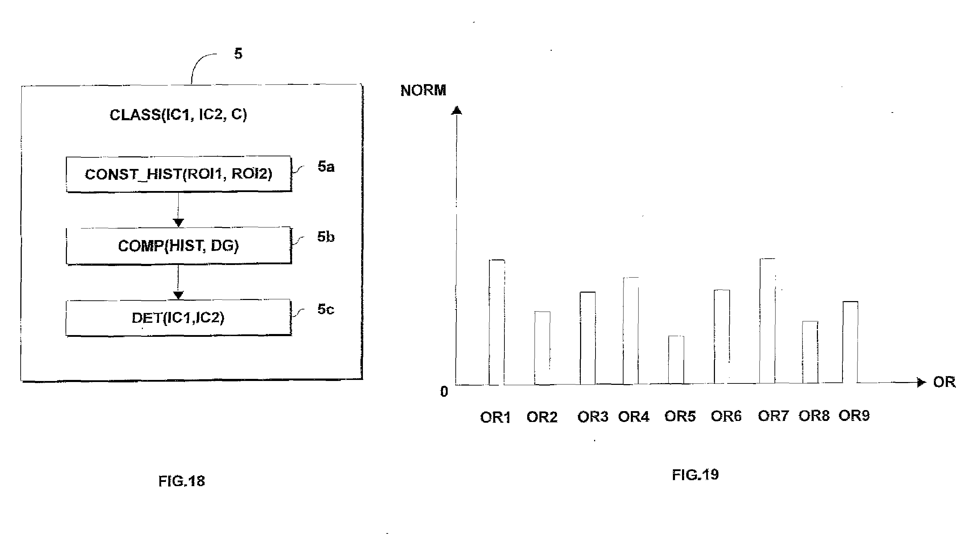

A chaque pixel d'un contour d'une vignette VIGNref, on calcule une orientation et on regarde à laquelle des neuf orientations OR elle appartient. On cumule les normes NORM des orientations sur l'ensemble des pixels des contours d'une vignette VIGNref. On obtient ainsi un histogramme de référence tel qu'illustré à la Fig. 19.

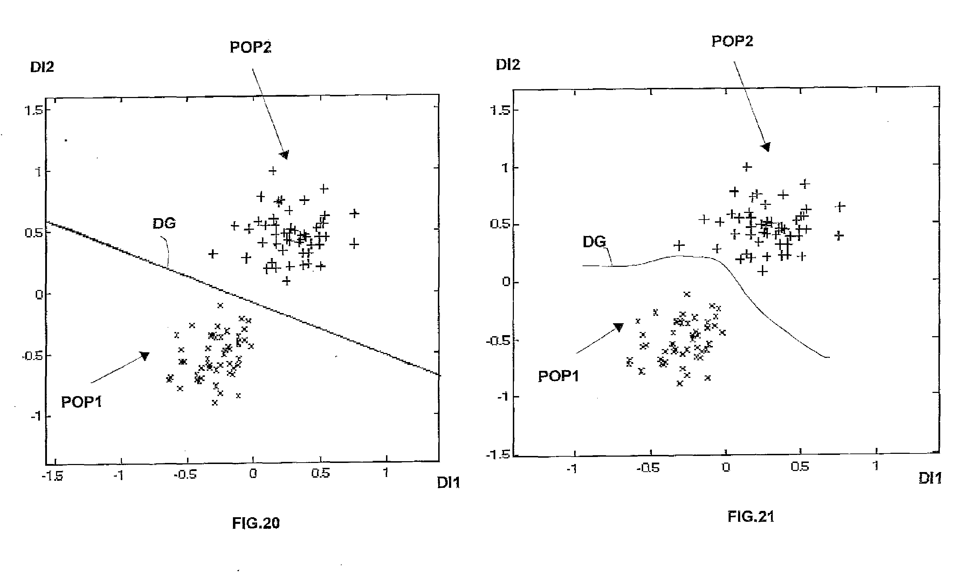

On obtient ainsi M histogrammes de référence qui peuvent être répartis en deux types de populations (une population avec un piéton ou une population sans) comme illustré de façon schématique en 2D (DI1, D12) sur la Fig. 20. On notera qu'un vecteur « histogramme » ayant ici 9 dimensions, une représentation plus adéquate serait en 9 dimensions. Par soucis de simplification, uniquement 2 dimensions ont été représentées. Afin de dissocier ces 2 populations, un algorithme d'apprentissage détermine une frontière de décision.

Dans un mode de réalisation non limitatif, on construit cette frontière par un séparateur à vaste marge, méthode connue de l'homme du métier appelée méthode SVM (« Support-Vector Machine » en anglais) - édité par Kluwer Academic Publishers , Boston et écrit par Corinna Cortes et Vladimir Vapnik. La frontière DG peut être de manière non limitative une fonction polynômiale (par exemple Fig. 20) ou une fonction gaussienne (par exemple Fig. 21).

L'étape de classification comporte les sous-étapes suivantes.

a) Créer d'un vecteur de caractéristiques (C) à partir des régions d'intérêt ROI1 et ROI2 déterminées lors des étapes précédentes (respectivement par reconnaissance de forme et par détection de mouvement selon le premier mode de réalisation DET_MVT1), on construit des histogrammes HIST de gradients orientés C (sous-étape CONST_HIST(ROI1, ROI2) illustrée à la Fig. 18). Dans un exemple non limitatif, neuf gradients C sont utilisés. On obtient des vecteurs « histogramme » à 9 dimensions.

b) On classifie ledit vecteur de caractéristiques C par comparaison avec une frontière de décision DG déterminée préalablement lors d'une étape d'apprentissage (tel que décrit ci-dessus) (sous-étape COMP(HIST, DG) illustrée à la Fig. 18).

A cet effet, on compare alors les vecteurs obtenus « histogrammes » avec la frontière de décision DG. Plus on s'éloigne de la frontière, et plus la probabilité d'appartenir à une population est élevée. Par ailleurs, plus on se rapproche de la frontière et plus l'appartenance à une population est ambiguë.

c) On détermine un indice de confiance associé IC fonction de la distance du vecteur de caractéristiques par rapport à ladite frontière de décision DG (sous-étape DET(IC1, IC2) illustrée à la Fig. 18).

On définit ainsi des premiers et deuxièmes indices de confiance IC1, IC2 appliqués respectivement aux premières régions d'intérêt ROI1 et aux deuxièmes régions d'intérêt ROI2 et donc respectivement aux vecteurs « histogrammes » construits HIST.

Ainsi, plus un vecteur « histogramme » HIST est proche de la frontière DG, plus l'indice de confiance associé IC est proche de 0.5 par exemple (dans le cas où la valeur d'un indice de confiance se situe entre 0 et 1).

Au contraire, plus un vecteur « histogramme » HIST est loin de la frontière

DG dans la région POP1, plus l'indice de confiance IC1 d'appartenance a la population POP1 est élevée et plus l'indice de confiance d'appartenance IC2 à la population POP2 est faible.

Dans l'exemple non limitatif pris dans les Fig. 20 et 21, la première POP1 représente la première population représentative d'un piéton. Dans ce cas, l'indice de confiance IC1 est proche de 1 lorsqu'il est loin de la frontière DG et dans cette région POP1.

On effectue ainsi une classification d'un obstacle O avec les indices de confiance IC1, IC2 appliqués respectivement aux premières et deuxièmes régions d'intérêt ROI1, ROI2 par rapport aux vecteurs histogrammes HIST, la classification permettant de déterminer la catégorie de l'obstacle à laquelle il appartient, ici un piéton ou non.

**Dans une cinquième étape 5),** on effectue une deuxième détection d'obstacle O par capteur(s) avec une plage de détection inférieure à un premier seuil S1 résultant en une position déterminée POS (étape DET_CAPT(POS, S1)).

- premier mode de réalisation

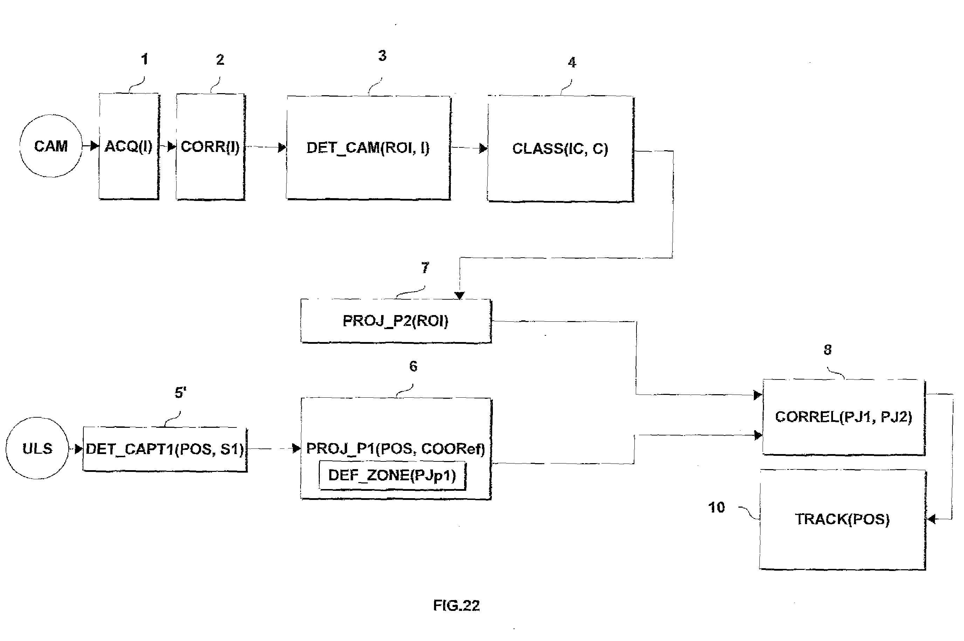

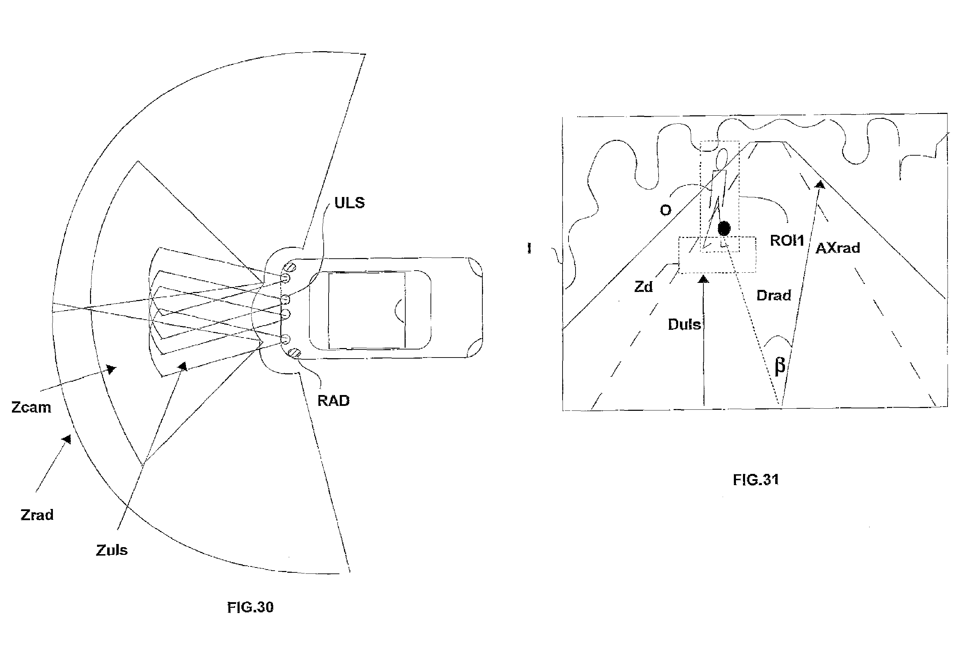

Dans un premier mode de réalisation non limitatif illustré à la Fig. 22, la deuxième détection s'effectue au moyen de capteurs à ultrasons ULS (étape DET_CAPT1(POS, S1)). Le premier seuil S1 est représentatif de la plage de détection maximale d'un capteur à ultrasons ULS. Dans un exemple non limitatif, le premier seuil S1 est alors égal à 4 mètres. La détection par capteurs à ultrasons étant connue de l'homme du métier, elle n'est pas décrite ici. On notera seulement que la position déterminée résultante POS comporte une distante Duls entre l'obstacle O et le capteur à ultrasons du véhicule V et une zone de détection Zd (qui est de forme rectangulaire) telle qu'illustrée dans l'exemple schématique non limitatif de la Fig. 31.

On notera que le fait d'effectuer une détection au moyen d'une caméra (que ce soit par reconnaissance de forme ou par détection de mouvement) combinée avec une détection par capteurs à ultrasons (tel qu'illustré sur la Fig. 24) permet de couvrir une zone de détection plus large (tel qu'illustré sur la Fig. 25) que par détection par caméra uniquement (tel qu'illustré à la Fig. 23).

- deuxième mode de réalisation

Dans un deuxième mode de réalisation non limitatif illustré à la Fig. 26, la deuxième détection s'effectue au moyen de capteurs radars RAD (étape DET_CAPT2(POS, S1)). Le premier seuil S1 est représentatif de la plage de détection maximale d'un capteur radar RAD. Dans un exemple non limitatif, le premier seuil S1 est alors égal à 60 mètres. La détection par capteurs radars étant connue de l'homme du métier, elle n'est pas décrite ici. On notera seulement que la position déterminée résultante POS comporte une distante Drad entre l'obstacle O et le capteur radar du véhicule V et un angle β entre l'obstacle et l'axe du capteur radar tel qu'illustré dans l'exemple schématique non limitatif de la Fig. 31.

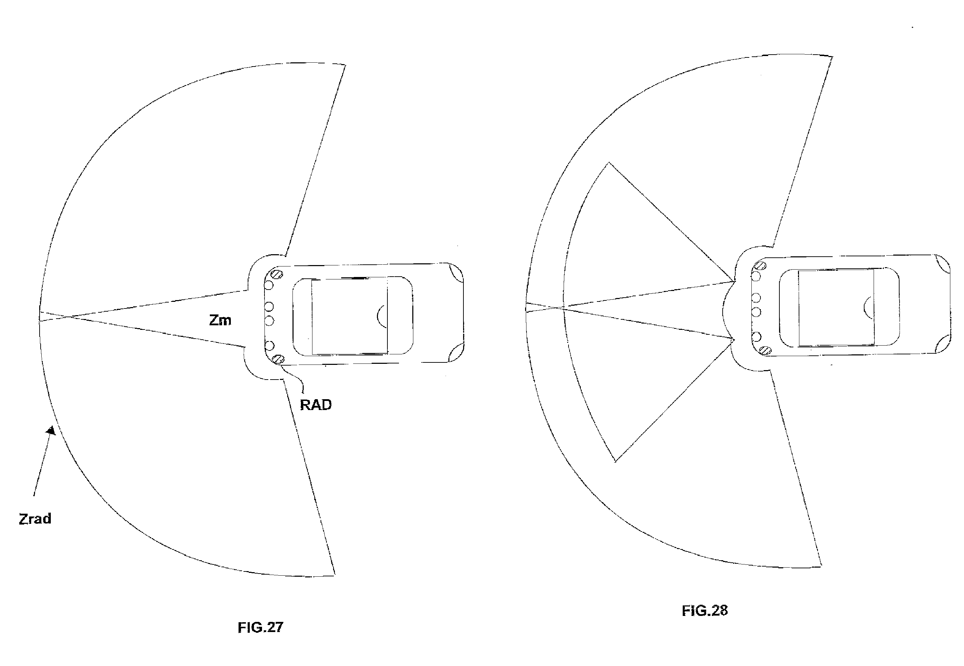

On notera que le fait d'effectuer une détection au moyen d'une caméra (que ce soit par reconnaissance de forme ou par détection de mouvement) combinée avec une détection par capteurs radars (tel qu'illustré sur la Fig. 27) permet de couvrir une zone de détection plus large (tel qu'illustré sur la Fig. 28) que par détection par caméra uniquement (tel qu'illustré à la Fig. 23). Par ailleurs, on notera que cela évite d'avoir une zone morte Zm où les obstacles O ne sont pas détectés lorsqu'uniquement des capteurs radars RAD sont utilisés.

- troisième mode de réalisation

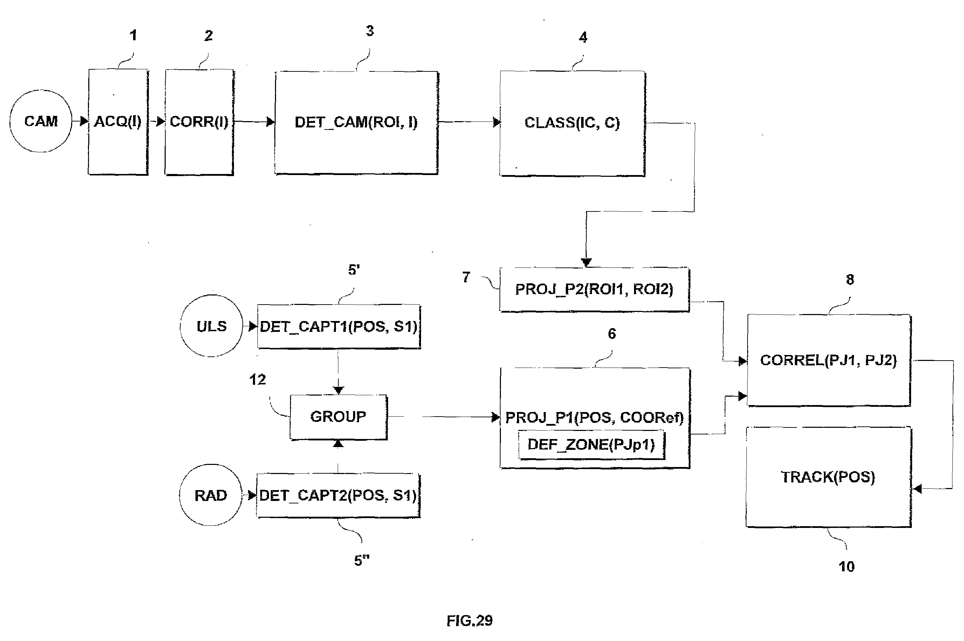

Dans un troisième mode de réalisation non limitatif illustré à la Fig. 29, la troisième détection s'effectue au moyen de capteurs à ultrasons ULS et de capteurs radars RAD. Dans ce cas, la troisième détection comporte une étape de regrouper les détections effectuées sur un même obstacle O par les capteurs à ultrasons ULS et les capteurs radars RAD (sous-étape GROUP illustrée à la Fig. 29).

Dans un mode de réalisation non limitatif, le regroupement s'effectue au moyen d'une comparaison entre les distances capteurs Duls et Drad obtenus. On compare chaque distance Duls avec chaque distance Drad. Si la différence de distances obtenue Diff1 par la comparaison est inférieure à un seuil S4 déterminé, alors on considère que c'est un même obstacle O qui a été détecté par les deux types de capteurs ULS et RAD. Dans un exemple non limitatif, le seuil S4 est de 50 cm.

Dans ce cas (Diff1 <= S4), dans un mode de réalisation non limitatif, on ne garde que la position POS détectée par le capteur radar RAD (la détection par ce dernier étant en général plus précise que celle par un capteur à ultrasons ULS).

Dans le cas contraire (Diff1 > S4), on estime que les détections ne correspondent pas à un même obstacle O et on les garde tant que l'on n'a as pu les regrouper avec d'autres détections.

On obtient ainsi une liste d'obstacle O détectés dans lequel on a supprimé les doubles détections.

On notera que le fait de détecter des obstacles par capteurs en utilisant à la fois des capteurs à ultrasons ULS et des capteurs radars RAD permet d'avoir une couverture très large de détection. En effet, comme on peut le voir sur la Fig. 30, la couverture de détection Zuls par ultrasons permet de couvrir une zone proche du véhicule et devant le véhicule, tandis que la couverture de détection Zrad permet de couvrir une zone plus éloignée du véhicule et sur les côtés du véhicule, tel qu'illustré sur la Fig. 30. On remarquera que dans cette dernière détection par radars, il existe une zone non détecté Zm que l'on appelle également zone morte.

Le fait d'effectuer les détections au moyen des deux types de capteurs ULS et RAD permet de couvrir la zone morte Zm tel qu'illustré à la Fig. 27.

Par ailleurs, on notera que le fait d'effectuer une détection au moyen d'une caméra (que ce soit par reconnaissance de forme ou par détection de mouvement) combinée avec une détection par capteurs permet localiser plus précisément les obstacle détectés dans le repère véhicule, que ce soit une combinaison avec une détection par capteurs à ultrasons seuls ULS (tel qu'illustré à la Fig. 25) ou par capteurs radar seuls RAD (tel qu'illustré à la Fig. 28) ou par capteurs à ultrasons et radars (tel qu'illustré à la Fig. 30).

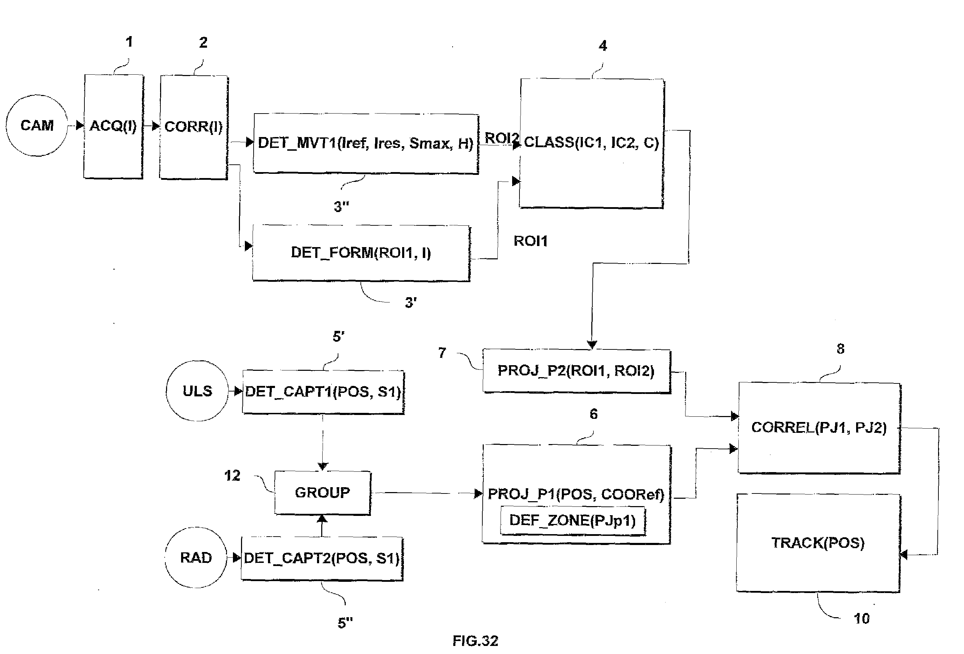

On notera que lorsque le troisième mode de réalisation de la première détection par traitement d'image et la deuxième détection de mouvement sont utilisés, on obtient tel qu'illustré à la Fig. 32 :

- une détection par traitement d'images comprenant :

    - une détection par reconnaissance de forme DET_FORM(ROI1, I) ;
    - une détection de mouvement DET_MVT1(Iref, IS, Smax, H) ;

- une détection par capteurs comprenant :

    - une détection par capteurs ultrasons ULS DET_CAPT1(POS, S1) ;
    - une détection par capteurs radars RAD DET_CAPT2(POS, S1).

**Dans une sixième étape 6),** on projette la position POS définie dans un repère de référence COORef (étape PROJ_P1(POS, COORef)).

Dans un mode de réalisation non limitatif, le repère de référence COORef est le repère image XI ; YI. Cela permet de minimiser l'impact des erreurs de détection lors du calcul de distance dans l'image d'un obstacle O, contrairement à une solution dans laquelle un repère véhicule serait pris en compte.

Dans un exemple non limitatif, on notera que pour effectuer la projection de la position POS dans le repère image XI ; YI, il suffit de connaître la correspondance entre position dans le repère image et la position dans le repère véhicule Xv, Yv.

La projection s'effectue selon une matrice de projection MP suivante.

Matrice de passage MP :

$$
\begin{matrix}
-3.353858 & 3.332719 & 1029.732666 \\
-0.077005 & 1.159693 & 467.425964 \\
-0.000233 & 0.009181 & 1.000000
\end{matrix}
$$

$$\text{Equation } [XI, YI] = f(Xv, Yv)$$

$$xi' = Xv*50$$

$$yi' = Yv*50 - 200$$

$$w = 1/ (xi'*MP(3,1) + yi'*MP(3,2) + MP(3,3))$$

$$xi = (xi'*MP(1,1) + yi'*MP(1,2) + MP(1,3)) * w$$

$$yi = (xi'*MP(2,1) + yi'*MP(2,2) + MP(2,3)) * w$$

On obtient des premières projections PJ1, telles qu'illustrées schématiquement à la Fig. 33 et à la Fig. 34, correspondant à des obstacles O dont la position POS a été détectée par les capteurs, que ce soient à ultrasons ULS et/ou radar RAD.

On notera que la projection PJ1 d'une position POS d'un obstacle O déterminée par un capteur à ultrasons ULS donne un rectangle. Dans l'exemple illustré à la Fig. 33, on a quatre rectangles PJ11, PJ13, PJ15, PJ17 (en traits pointillés).

Par ailleurs, la projection PJ1 d'une position POS d'un obstacle O déterminée par un capteur radar RAD donne un point. Dans l'exemple illustré à la Fig. 34, on a quatre points PJ12, PJ14, PJ16, PJ18.
Il en est de même dans le cas où les deux types de capteurs (par radar et par ultrasons) ont été utilisés.

Dans les deux cas (capteurs à ultrasons ou capteurs radars), cette étape de projection de la position POS comporte en outre une sous-étape de définir à partir d'une projection PJ1 une zone de projection associée PJ1 p.
Dans un mode de réalisation non limitatif, la largeur de la zone de projection PJ1p est centrée sur la projection PJ1 et la base de la zone de protection est tangente au point de projection PJ1 (dans le cas d'un point), tel qu'illustré sur la Fig. 34, ou à la base du rectangle de projection PJ1 (dans le cas d'un rectangle) tel qu'illustré sur la Fig. 33.

Dans un exemple non limitatif, on prend les dimensions d'une zone de projection égales à 1,7 m en hauteur sur 0,7m en largeur. Les dimensions de cette zone de projection PJ1p sont ainsi déterminées de sorte correspondre à celles d'un piéton.

Ainsi, dans l'exemple illustré à la Fig. 33, on a quatre zones de projection PJ11p, PJ13p, PJ15p, PJ17p associées respectivement aux quatre rectangles PJ 11, PJ 13, PJ 15, PJ 17.

Ainsi, dans l'exemple illustré à la Fig. 34, on a quatre zones de projection PJ12p, PJ14p, PJ16p, PJ18p associées respectivement aux quatre points de projection PJ12, PJ 14, PJ16, PJ 18.

**Dans une septième étape 7),** on projette les régions d'intérêt ROI dans ledit repère de référence COORef et on attribue une position déterminée POS à l'obstacle classifié O en fonction de la mise en correspondance (étape PROJ_P2(ROI)).

On obtient des deuxièmes projections PJ2, telles qu'illustrées schématiquement à la Fig. 33 et à la Fig. 34, correspondant aux régions d'intérêt validées ROI. On notera que les projections PJ2 sont sous forme de rectangles. Dans l'exemple illustré, on a trois rectangles correspondant PJ21, PJ22, PJ23 (en traits pleins).

On rappelle que lés régions d'intérêt ROI sont les régions d'intérêt ROI1, ROI2 définies à l'étape 3).

**Dans une huitième étape 8),** on met en correspondance les deux projections obtenues PJ1, PJ2 (étape CORREL(PJ1, PJ2)).

Dans un mode de réalisation non limitatif, la mise en correspondance est une comparaison entre deux projections PJ1, PJ2 qui s'effectue selon les critères suivants :

- une surface de recouvrement Sr entre deux projections PJ1, PJ2 ;
- un ratio Rt en hauteur entre la taille des deux projections PJ1, PJ2 ; et
- une différence Diff2 de distances entre deux projections PJ1, PJ2.

On notera que la distance d'une projection PJ1 est la distance Duls ou Drad donnée par le capteur CAPT.
Par ailleurs, la distance d'une projection PJ2 est la distance détectée dans une image I d'une région d'intérêt ROI et recalculée dans le repère véhicule V par la matrice de projection MP.

Dans des exemples non limitatifs :

- la surface de recouvrement Sr est de 70% ;
- le ratio Rt se situe entre 0.5 et 1.5 ; et
- la différence Diff2 est de 1 mètre.

On rappelle que la projection PJ1 d'une détection par capteurs est représentée par la zone de projection PJ1p décrite précédemment. Donc, en pratique, la comparaison s'effectue entre une zone de projection PJ1p et une projection PJ2.

Ainsi, dans le cas où tous ces critères sont remplis, on estime que la mise en correspondance entre deux projections PJ1, PJ2 est positive. Dans le cas contraire, on garde la projection PJ1, PJ2 jusqu'à trouver une mise en correspondance avec une autre projection PJ2, PJ1 respectivement.

Si aucune mise en correspondance n'est trouvée, alors on estime qu'elle est négative.

Dans l'exemple schématique de la Fig.33 :

les projections PJ21, PJ11p

- se recoupent ;
- Sr > 70% ;
- Rt se situe entre 0.5 et 1.5 ;
- Diff2 < 1 m.

- les projections PJ22, et PJ13p

- se recoupent ;
- Sr < 70% ;
- Rt se situe entre 0.5 et 1.5 ;
- Diff2 > 1m.

- les projections PJ23, et PJ15p

- se recoupent ;
- Sr < 70% ;
- Rt se situe entre 0.5 et 1.5 ;
- Diff2 < 1 m.

Dans l'exemple schématique de la Fig.34 :

- les projections PJ21, PJ12p

- se recoupent ;
- Sr > 70% ;
- Rt se situe entre 0.5 et 1.5 ;
- Diff2 < 1 m.

- les projections PJ23, et PJ16p

- se recoupent ;
- Sr < 70% ;
- Rt se situe entre 0.5 et 1.5 ;
- Diff2 > 1m.

On attribue une position déterminée POS à l'obstacle classifié O en fonction de la mise en correspondance.

Ainsi, lorsque la mise en correspondance est positive, on en déduit que l'obstacle O correspondant est un piéton et dans un mode de réalisation non limitatif, on lui attribue:

- la position POS associée détectée par les capteurs ; et
- la région d'intérêt ROI associée issue de la classification.

Par ailleurs, dans un mode de réalisation non limitatif, on augmente son indice de confiance associé IC. Dans un exemple non limitatif, le nouvel indice de confiance IC = IC+(1 - IC)/2.

Dans un autre mode de réalisation, on peut lui associer :

- la position estimée dans le repère véhicule (de la région d'intérêt associée) ; et
- la zone de projection définie PJ1p associée.

On notera cependant que la position POS détectée par les capteurs est plus précise que la position estimée et que la région d'intérêt ROI est également plus précise que la zone de projection définie.

Si aucune mise en correspondance n'est trouvée pour une projection PJ1 ou PJ2 alors :

- dans un mode de réalisation non limitatif, on effectue les tests suivants.

    - Si la projection est une projection capteur PJ1, alors on en déduit que l'obstacle détecté O n'est pas un piéton ;
    - Si la projection est une projection PJ2 d'une région d'intérêt ROI, alors

        - Si l'indice de confiance IC qui lui est associé est supérieur à un seuil de confiance Sc,

            - Alors on en déduit que l'obstacle détecté O est un piéton,
            - Sinon, on en déduit que l'obstacle détecté n'est pas un piéton et on positionne son indice de confiance IC à 0.

Dans un exemple non limitatif, le seuil de confiance Sc = 0.7.

**Dans une neuvième étape 9),** on effectue un suivi des régions d'intérêt ROI classifiées sur une séquence SQ d'images acquises (étape TRACK(POS)).

Dans un exemple non limitatif on utilise une méthode bien connue de l'homme du métier appelée ESM (« efficient Second Order Method ») développé par l'INRIA et décrite dans le document « Benhimane, E. Malis, Real-time image-based tracking of planes using efficient second-order minimization IEEE/RSJ International Conference on Intelligent Robots Systems, Sendai, Japan, 2004 ».

Cette méthode se base sur une recherche d'un même motif dans une séquence SQ d'images acquises I, plus particulièrement entre une image courante et une image de référence et sur la répétition de ce motif dans un nombre déterminé d'images I de la séquence SQ. Cela évite de perdre une détection d'obstacle O dans le cas où un obstacle O ne serait pas détecté sur une image 1 d'une séquence SQ alors qu'il a été détecté sur les autres images 1.

B. Deuxième mode de réalisation

Le procédé de détection d'un obstacle dans un environnement d'un véhicule automobile selon l'invention est décrit dans un deuxième mode de réalisation non limitatif à la Fig. 35.

Outre l'ensemble des étapes décrites dans le premier mode de réalisation de la Fig. 1 (et ses variantes de réalisation), selon ce deuxième mode de réalisation, le procédé de détection comporte une étape supplémentaire (dixième étape) de valider la classification sur l'objet détecté O par rapport à des régions d'intérêt ROI et à des indices de confiance IC déterminés lors de la première détection et/ou de la classification. Ladite étape de validation est ainsi effectuée préalablement à l'étape 9) décrite précédemment (étape d'attribution d'une position déterminée POS à un obstacle O classifié) et comme on va le voir ci-après préalablement à l'étape 7) décrite précédemment (projection des régions d'intérêt ROI dans le repère de référence COORef).

Dans un mode de réalisation non limitatif, la validation comporte les sous-étapes suivantes telles qu'illustrées à la Fig. 36.

**10a)** Construire une carte de probabilité P_MAP correspondant à une image I dans laquelle chaque région d'intérêt classifiée ROI1, ROI2 est représentée par une distribution de probabilité (sous-étape CONST_P_MAP(IC, Dim) illustrée à la Fig. 36).

On établit ainsi une carte de probabilité P_MAP basée sur un ensemble de fonctions gaussiennes G cumulées, dans laquelle les fonctions gaussiennes G sont construites à partir :

- Des indices de confiance IC, un indice représentant la valeur maximale d'une fonction gaussienne G ;
- Des dimensions Dim des régions d'intérêt ROI représentant l'étalement d'une fonction gaussienne G. Dans un exemple non limitatif, la dimension prise est la largeur. Les dimensions prisent sont la hauteur et la largeur.

Ainsi, si on représente une fonction gaussienne G en terme mathématique, on a :

$$f(x) = ae^{-\frac{(x-b)^2}{2c^2}}$$

Avec e le nombre d'Euler.

La fonction gaussienne G est représentée de manière graphique sous forme de courbe symétrique en forme de cloche.

On a ainsi :

- a = la hauteur de la cloche, représentée par un indice de confiance IC ; et
- c = la largeur de la cloche, représentée par la taille (en largeur) d'une région d'intérêt ROI
- b = la position du sommet de la courbe.

La carte de probabilité P_MAP comporte ainsi une pluralité de fonctions gaussiennes G dont certaines peuvent se recouper ou non, tel qu'illustré dans un exemple non limitatif à la Fig. 38.

On notera que dans le cas où une détection par reconnaissance de forme DET_FORM(ROI1, I) et par détection de mouvement (DET_MVT1(Iref, Ires, Smax, H) sont utilisées, la carte de probabilité P_MAP est construite à partir des premières régions d'intérêt ROI1 et des deuxièmes régions d'intérêt ROI2 trouvées précédemment, tel qu'illustré sur la Fig. 37.

    b) Cumuler lesdites distributions de probabilité qui se recoupent dans la carte de probabilité (P_MAP) de manière à obtenir au moins un maximum local (sous-étape ADD_G(P_MAP, ICF) illustrée à la Fig. 36).

On obtient ainsi une pluralité de maximums locaux résultant en une pluralité d'indice de confiance ICF résultants. Un maximum local permet d'obtenir la localisation la plus probable d'avoir un obstacle O qui est un piéton.

Comme illustré sur l'exemple schématique de la Fig. 38, on va obtenir trois maximums locaux de fonctions gaussiennes G.

On notera que dans un mode de réalisation non limitatif, un indice de confiance résultant ICF est plafonné à 1.

    c) Valider la région d'intérêt ROI1, ROI2 la plus proche de chaque maximum local de la carte de probabilité P_MAP ((sous-étape VALID_CLASS(ROI, ICF) illustrée à la Fig. 36).

Dans une variante de réalisation non limitative, pour chaque maximum local, on choisit la région d'intérêt ROI (dont l'indice de confiance a été utilisé pour le maximum local) dont le sommet se trouve le plus proche dudit maximum local et on attribue à son indice de confiance associé IC, l'indice de confiance résultant ICF. Cette variante permet de se référer à une région d'intérêt ROI déjà existante car déterminée auparavant dans les étapes précédentes et permet de rester précis au niveau de la localisation d'un obstacle O (une région d'intérêt déjà existante étant centrée sur un obstacle O).

Ainsi, dans l'exemple explicatif du schéma de la Fig. 39 (en 2D pour simplification), on a deux fonctions gaussiennes g1, g2 et leur maximum local gc. La fonction gaussienne g2 est celle dont le sommet est le plus proche du maximum local, La région d'intérêt ROI associée est donc validée.

Dans une autre variante de réalisation non limitative, on pourrait retenir l'indice de confiance ICF résultant du cumul des fonctions gaussiennes. A ce moment, le choix de la région d'intérêt ROI serait une région d'intérêt ROI centrée sur cet indice de confiance.

On rappelle que les régions d'intérêt ROI sont les régions ROI1, ROI2 déterminées lors de l'étape 3 et les indices de confiance IC sont les indices de confiance IC1, IC2 déterminés lors de l'étape 4 (issus de la classification).

    d) comparer les maximums locaux des fonctions gaussiennes qui se recoupent par rapport à un seuil de détection SG (sous-étape COMP(G, SG) illustrée à la Fig. 36).

Si chaque maximum local (en hauteur) est inférieur à ce seuil, on estime que l'indice de confiance résultant ICF est nul. On estime ainsi qu'aucun piéton n'est détecté, mais que les fonctions gaussiennes correspondent à du bruit ou à une fausse détection. Dans ce cas, on ne garde aucune région d'intérêt ROI qui a servi au cumul.

Ainsi, la validation de la classification permet de sélectionner des régions d'intérêt ROI classifiées prises parmi les régions d'intérêt ROI issues de l'étape de classification et qui représentent chacune un piéton.

A ce moment, lors de la septième étape 7), les régions d'intérêt ROI qui sont projetées dans le repère de référence COORef sont les régions d'intérêt validées.

Par ailleurs, lors de la neuvième étape 9), on attribue une position déterminée POS à l'obstacle classifié O en fonction de la mise en correspondance et de la validation. Ainsi, lorsqu'une mise en correspondance est positive, on associe à l'obstacle détecté O la région d'intérêt validée.

On notera que lorsque le troisième mode de réalisation de la première détection par traitement d'image et la deuxième détection de mouvement sont utilisés, on obtient tel qu'illustré à la Fig. 40 :

- une détection par traitement d'images comprenant :

  - une détection par reconnaissance de forme DET_FORM(ROI1, I) ;
  - une détection de mouvement selon le premier mode de réalisation DET_MVT1(Iref, IS, Smax, H) ;

- une détection par capteurs comprenant :

  - une détection par capteurs ultrasons ULS DET_CAPT1(POS, S1) ;
  - une détection par capteurs radars RAD DET_CAPT2(POS, S1).

Ainsi, le procédé décrit permet de détecter de façon fiable des obstacles O qui sont des piétons ou non en se basant non seulement sur une détection par traitement d'images, mais également sur une détection par capteurs et avec un minimum de zone morte.

Le procédé de l'invention est mis en oeuvre par un dispositif DISP de détection d'un obstacle O dans un environnement E d'un véhicule automobile, ledit dispositif étant représenté schématiquement à la Fig. 41.

Ce dispositif DISP est intégré dans le véhicule automobile V.

Ce dispositif DISP est apte à :

- Effectuer une première détection d'obstacle O par traitement d'image résultant en une définition d'au moins une région d'intérêt ROI ;
- Classifier l'obstacle détecté O avec un indice de confiance appliqué à la région d'intérêt ROI par rapport à des caractéristiques données C ;
- Effectuer une deuxième détection d'obstacle O par capteur(s) avec une plage de détection inférieure à un premier seuil S1 résultant en une position déterminée POS ;
- Projeter la position déterminée POS dans un repère de référence COORef ;
- Projeter la région d'intérêt ROI dans ledit repère de référence COORef ; et
- Mettre en correspondance les deux projections obtenues PJ1, PJ2 et attribuer une position déterminée POS à l'obstacle classifié O en fonction de la mise en correspondance.

Dans des modes de réalisation non limitatifs, le dispositif de détection DISP est en outre apte à :

- Lors de la première détection par reconnaissance de forme :

  - Construire une pyramide d'images Isr par sous échantillonnage récursif d'une image acquise 1 ;
  - Pour chaque image sous-échantillonnée Isr :

    - Balayer ladite image Isr avec une vignette VIGN représentative d'un obstacle déterminé O ;
    - A chaque position successive d'une vignette VIGN dans ladite image Isr, analyser son contenu au moyen d'un ensemble de classificateurs Cls, Clw, lesdits classificateurs étant déterminés lors d'une phase d'apprentissage préalable.

- Lors de la première détection par reconnaissance de forme, déterminer une zone de balayage Zb dans une image sous-échantillonnée Isr.

- Lors de la première détection de mouvement :

  - Construire une image d'arrière-plan Iref recalculée pour chaque image I d'une séquence d'image SQ ;
  - Soustraire l'image d'arrière-plan Iref à l'image courante Ic dans la séquence d'image SQ résultant en une image résultante Ires ;
  - Discriminer des mouvements déterminés dans l'image résultante Ires en fonction d'un seuil Smax ; et
  - Extraire des deuxièmes régions d'intérêt ROI2 à partir de la discrimination.

- Lors de l'étape de classification :

  - Créer d'un vecteur de caractéristiques C à partir des régions d'intérêt ROI ;
  - Classifier ledit vecteur de caractéristiques C par comparaison avec une frontière de décision DG déterminée préalablement lors d'une étape d'apprentissage ; et
  - Déterminer un indice de confiance associé IC fonction de la distance du vecteur de caractéristiques par rapport à ladite frontière de décision.

- Lors de l'étape de validation :

  - Construire une carte de probabilité P_MAP correspondant à une image I dans laquelle chaque région d'intérêt classifiée ROI1, ROI2 est représentée par une distribution de probabilité ;
  - Cumuler lesdites distributions de probabilité qui se recoupent dans la carte de probabilité P_MAP de manière à obtenir au moins un maximum local ; et
  - Valider la région d'intérêt ROI1, ROI2 la plus proche de chaque maximum local de la carte de probabilité (P_MAP).

- Appliquer un changement de perspective à une image acquise I.

- Suivre des régions d'intérêt classifiées sur une séquence SQ d'images acquises I.

Dans un mode de réalisation non limitatif, le dispositif DISP comporte un ensemble d'unités de contrôle UC comportant au moins une unité de contrôle apte à effectuer les étapes décrites ci-dessus. Dans une variante de réalisation non limitative, l'ensemble comporte une pluralité d'unités de contrôle UC1, UC2, UC3. Ainsi, dans des variantes de réalisation non limitatives, les unités de contrôle UC peuvent être réparties dans la caméra CAM, dans les projecteurs PJ, dans les capteurs ULS, RAD, ou encore dans un calculateur véhicule ECU.

Dans l'exemple non limitatif de la Fig. 41, les fonctions de premières détections par traitement d'image sont réparties dans la caméra CAM et les fonctions de deuxièmes détections par capteurs dans les capteurs CAPT, les autres fonctions étant réparties dans le calculateur ECU.

Dans un mode de réalisation non limitatif, la caméra CAM est de type VGA ou WGA et permet d'acquérir des images de taille respective de 640*480 pixels ou 752*480 pixels. Dans un exemple non limitatif, l'angle d'ouverture $\phi$ est de 40°. Bien entendu, d'autres types de caméras avec d'autres caractéristiques peuvent être utilisés.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de réglage DISP peut comporter un ou plusieurs produits programmes d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 41, il existe une pluralité de produits programmes d'ordinateur PG1, PG2, PG3 qui sont inscrits dans une mémoire de(s) l'unité(s) de contrôle UC1, UC2, UC3 du dispositif DISP.

Bien entendu, l'invention n'est pas limitée aux modes de réalisation et exemples décrits ci-dessus.

Ainsi, lorsqu'une détection d'un piéton a été validée, on peut prévoir un système d'alerte qui permet d'alerter le conducteur du véhicule V qu'un piéton se trouve à proximité du véhicule et lui permettre de freiner par exemple. On peut prévoir également un système de freinage automatique suite à une telle détection.

Ainsi, le procédé de détection peut être utilisé pour une détection arrière et/ou avant du véhicule automobile V.

Ainsi, l'invention présente notamment les avantages suivants :

- Réduire le nombre de traitements à effectuer grâce à :

  - la détermination de régions d'intérêt dans des zones de détection particulières (au dessous d'une ligne d'horizon ou encore dans une zone de balayage) ;
  - l'établissement du déplacement d'un obstacle par rapport au véhicule au moyen de points d'intérêt spécifiques ;
  - l'application de l'étape de classification (par une méthode de répartition par catégories) uniquement sur des obstacles détectés par reconnaissance de forme et de mouvement et non pas sur toute une image ;

- Rendre plus fiable la détection d'un piéton grâce à la combinaison :

    - une détection par reconnaissance de forme qui permet de reconnaître un piéton en entier ;
    - une détection de mouvement qui permet de reconnaître un obstacle qui est mobile et notamment des piétons dont on ne voit qu'une partie du corps qui bouge ;
    - une détection par capteurs.

- Utiliser des composants couramment présents sur un véhicule automobile, tels qu'une caméra et des détecteurs à ultrasons ou radars ;
- Rendre plus robuste la détection d'un piéton en utilisant une méthode de répartition d'obstacles par catégories pour classifier tous les obstacles détectés par reconnaissance de forme et par reconnaissance de mouvement ;
- Augmenter l'indice de confiance concernant la détection d'un piéton grâce à l'étape de validation et réduire ainsi le nombre de détections à traiter pour la suite le cas échéant ; et
- Confirmer la détection d'un obstacle sur une séquence d'images lorsque cette détection n'est plus détectée d'une image sur l'autre par les premières et deuxièmes détections.

**Revendications**

1. Procédé de détection d'un obstacle (O) dans un environnement (E) d'un véhicule automobile, **caractérisé en ce qu'**il comporte les étapes de :

    - Effectuer une première détection d'obstacle (O) par traitement d'image résultant en une définition d'au moins une région d'intérêt (ROI) ;
    - Classifier l'obstacle détecté (O) avec un indice de confiance (IC) appliqué à la région d'intérêt (ROI) par rapport à des caractéristiques données (C) ;
    - Effectuer une deuxième détection d'obstacle (O) par capteur(s) (ULS ; RAD) avec une plage de détection inférieure à un premier seuil (S1) résultant en une position déterminée (POS) ;
    - Projeter la position déterminée (POS) dans un repère de référence (COORef) ;
    - Projeter la région d'intérêt (ROI) dans ledit repère de référence (COORef) ;
    - Mettre en correspondance les deux projections obtenues (PJ1, PJ2) et attribuer une position déterminée (POS) à l'obstacle classifié (O) en fonction de la mise en correspondance.

2. Procédé de détection selon la revendication précédente 1, selon lequel le repère de référence est le repère image (XI, YI).

3. Procédé de détection selon la revendication 1 ou 2, selon lequel la première détection par traitement d'image comporte une détection par reconnaissance de forme dans une image acquise dudit environnement.

4. Procédé de détection selon la revendication précédente, selon lequel la détection par reconnaissance de forme comporte les sous-étapes de :

    - Construire une pyramide d'images (Isr) par sous échantillonnage récursif d'une image acquise (I) ;
    - Pour chaque image sous-échantillonnée (Isr) :

        - Balayer ladite image (Isr) avec une vignette (VIGN) représentative d'un obstacle déterminé (O) ;
        - A chaque position successive d'une vignette (VIGN) dans ladite image (Isr), analyser son contenu au moyen d'un ensemble de classificateurs (Cls, Clw), lesdits classificateurs étant déterminés lors d'une phase d'apprentissage préalable.

5. Procédé de détection selon la revendication précédente, selon lequel la détection par reconnaissance de forme comporte en outre une sous-étape supplémentaire de déterminer une zone de balayage (Zb) dans une image sous-échantillonnée (Isr).

6. Procédé de détection selon l'une quelconque des revendications précédentes, selon lequel la première détection par traitement d'image comporte une détection de mouvement par rapport au véhicule (V) sur une séquence (SQ)

d'images acquises (I) dudit environnement (E).

7. Procédé de détection selon la revendication précédente, selon lequel la détection de mouvement comporte les sous étapes de :

- Construire une image d'arrière-plan (Iref) recalculée pour chaque image (I) d'une séquence d'images (SQ) ;
- Soustraire l'image d'arrière-plan (Iref) à l'image courante (Ic) dans la séquence d'images (SQ) résultant en une image résultante (Ires) ;
- Discriminer des mouvements déterminés dans l'image résultante (Ires) en fonction d'un seuil (Smax) ; et
- Extraire des deuxièmes régions d'intérêt (ROI2) à partir de la discrimination.

8. Procédé de détection selon l'une quelconque des revendications précédentes, selon lequel l'étape de classification comporte les sous étapes de :

- Créer un vecteur de caractéristiques (C) à partir des régions d'intérêt (ROI) ;
- Classifier ledit vecteur de caractéristiques (C) par comparaison avec une frontière de décision (DG) déterminée préalablement lors d'une étape d'apprentissage ; et
- Déterminer un indice de confiance associé (IC) fonction de la distance du vecteur de caractéristiques par rapport à ladite frontière de décision (DG).

9. Procédé de détection selon la revendication précédente, selon lequel le vecteur de caractéristiques (C) est un histogramme des gradients orientés d'une région d'intérêt (ROI1, ROI2).

10. Procédé de détection selon l'une quelconque des revendications précédentes, selon lequel il comporte en outre une étape supplémentaire de valider la classification sur l'objet détecté par rapport à des régions d'intérêt et par rapport à des indices de confiance déterminés lors de la première détection et/ou lors de la classification.

11. Procédé de détection selon la revendication précédente, selon lequel l'étape de validation comporte les sous-étapes de :

- Construire une carte de probabilité (P_MAP) correspondant à une image (I) dans laquelle chaque région d'intérêt classifiée (ROI1, ROI2) est représentée par une distribution de probabilité ;
- Cumuler lesdites distributions de probabilité qui se recoupent dans la carte de probabilité (P_MAP) de manière à obtenir au moins un maximum local ; et
- Valider la région d'intérêt (ROI1, ROI2) la plus proche de chaque maximum local de la carte de probabilité (P_MAP).

12. Procédé de détection selon l'une quelconque des revendications précédentes, selon lequel la détection par capteur (s) s'effectue au moyen de capteurs à ultrasons (ULS).

13. Procédé de détection selon l'une quelconque des revendications précédentes, selon lequel la détection par capteur (s) s'effectue au moyen de capteurs radars (RAD).

14. Procédé de détection selon l'une quelconque des revendications précédentes, selon lequel il comporte en outre une étape supplémentaire d'appliquer un changement de perspective à une image acquise (I).

15. Procédé de détection selon l'une quelconque des revendications précédentes, selon lequel il comporte en outre une étape supplémentaire de suivi des régions d'intérêt classifiées sur une séquence (SQ) d'images acquises.

16. Dispositif de détection d'un obstacle (O) dans un environnement (E) d'un véhicule automobile, agencé pour mettre en oeuvre un procédé selon l'une quelconque des revendication précédentes.

17. Produit programme d'ordinateur (PG) comportant une ou plusieurs séquences d'instructions exécutables par une unité de traitement d'information, l'exécution desdites séquences d'instructions permettant une mise en oeuvre du procédé selon l'une quelconque des revendications précédentes 1 à 15.

FIG.1

21

I1

O

FIG.2

I2

O

FIG.3

FIG.4

FIG.5

FIG.6

FIG.7

FIG.8

FIG.9

FIG.10

FIG.11

VIGN

CLs0 → CLs1 → CLsn-1 → CLsn → MEM_POS

NOK    NOK    NOK    NOK

REJ_POS

FIG.12

FIG.13

**FIG.14**

**FIG.15**

**FIG.16**

FIG.17

EP 2 275 970 A1

5

CLASS(IC1, IC2, C)

CONST_HIST(ROI1, ROI2)    5a

COMP(HIST, DG)    5b

DET(IC1,IC2)    5c

FIG.18

NORM

OR

0

OR1  OR2  OR3  OR4  OR5  OR6  OR7  OR8  OR9

FIG.19

FIG.21

FIG.20

FIG.22

FIG.24

FIG.23

FIG.25

FIG.26

FIG.28

RAD

Zm

Zrad

FIG.27

EP 2 275 970 A1

CAM → ACQ(I) → CORR(I) → DET_CAM(ROI, I) → CLASS(IC, C)

1   2   3   4

PROJ_P2(ROI1, ROI2)

7

ULS → DET_CAPT1(POS, S1)

5'

12   GROUP

RAD → DET_CAPT2(POS, S1)

5"

6   PROJ_P1(POS, COORef)

DEF_ZONE(PJp1)

CORREL(PJ1, PJ2)

8

TRACK(POS)

10

FIG.29

EP 2 275 970 A1

ULS

Zcam

Zrad

Zuls

RAD

**FIG.30**

O

I

Zd

Duls

ROI1

AXrad

Drad

β

**FIG.31**

FIG.32

EP 2 275 970 A1

POS , ROIv

MP

XI

PJ11p

PJ13p

PJ22

PJ13

PJ11

PJ21

PJ17p

PJ17

PJ23

PJ15p

PJ15

YI

**FIG.33**

POS , ROIv

MP

XI

PJ14p

PJ12p

PJ22

PJ21

PJ14

PJ12

PJ16p

PJ18p

PJ23

PJ16

PJ18

YI

**FIG.34**

CAM → ACQ(I) → CORR(I) → DET_CAM(ROI, I) → CLASS(IC, C) → VALID_CLASS(IC, ROI)

1　　2　　3　　4　　11

PROJ_P2(ROI)

7

CORREL(PJ1, PJ2)

8

CAPT → DET_CAPT(POS, S1) → PROJ_P1(POS, COORef)

DEF_ZONE(PJp1)

5　　6

TRACK(POS)

10

FIG.35

11

VALID_CLASS(IC1, IC2, ROI1, ROI2)

11a
CONST_P_MAP(IC, Dim)

11b
ADD_G(P_MAP, ICF)

11c
VALID_CLASS(ROI, ICF)

11d
COMP(G, SG)

FIG.36

FIG.37

FIG.39

gc

g1

g2

FIG.38

P_MAP

G

ROI

FIG.40

FIG.41

Europäisches
Patentamt

European
Patent Office

Office européen
des brevets

# RAPPORT DE RECHERCHE EUROPEENNE

Numéro de la demande

EP 10 16 8478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | AYATO TOYA ET AL: "Pedestrian recognition using stereo vision and Histogram of Oriented Gradients" VEHICULAR ELECTRONICS AND SAFETY, 2008. ICVES 2008. IEEE INTERNATIONAL CONFERENCE ON, IEEE, PISCATAWAY, NJ, USA, 22 septembre 2008 (2008-09-22), pages 57-62, XP031345323 ISBN: 978-1-4244-2359-0 * III. "Pedestrian detection system" - V. "Experimental results",figures 2-6 * | 1-17 | INV. G06K9/00 B60R1/00 G01S5/00 G06T7/20 |
| X | SPINELLO L ET AL: "Human detection using multimodal and multidimensional features" 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 mai 2008 (2008-05-19), pages 3264-3269, XP031340652 ISBN: 978-1-4244-1646-2 * le document en entier * | 1-17 | |
| | | | **DOMAINES TECHNIQUES RECHERCHES (IPC)** |
| X | CRISTIANO PREMEBIDA ET AL: "A Lidar and Vision-based Approach for Pedestrian and Vehicle Detection and Tracking" INTELLIGENT TRANSPORTATION SYSTEMS CONFERENCE, 2007. ITSC 2007. IEEE, IEEE, PI, 1 septembre 2007 (2007-09-01), pages 1044-1049, XP031151382 ISBN: 978-1-4244-1395-9 * le document en entier * | 1-17 | G06K B60R G01S G06T |

-/--

Le présent rapport a été établi pour toutes les revendications

| Lieu de la recherche | Date d'achèvement de la recherche | Examinateur |
|---|---|---|
| La Haye | 26 juillet 2010 | Grigorescu, Cosmin |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 10 16 8478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SCHWEIGER R ET AL: "Multiple-cue data fusion with particle filters for vehicle detection in night view automotive applications" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA LNKD-DOI:10.1109/IVS.2005.1505195, 6 juin 2005 (2005-06-06), pages 753-758, XP010833887 ISBN: 978-0-7803-8961-8 * le document en entier * ----- | 1-3,12, 13,16,17 | |
| X | D. GERONIMO ET AL.: "Pedestrial detection using Adaboost learning of features and vehicle pitch estimation" PROC. OF THE SIXTH IASTED INTERNATIONAL CONFERENCE ON VIZUALIZATION, IMAGING, AND IMAGE PROCESSING, 28 août 2006 (2006-08-28), - 30 août 2006 (2006-08-30) pages 400-405, XP002586106 * le document en entier * ----- | 1,16,17 | |
| A | GANDHI T ET AL: "Pedestrian Protection Systems: Issues, Survey, and Challenges" IEEE TRANSACTIONS ON INTELLIGENT TRANSPORTATION SYSTEMS, IEEE SERVICE CENTER, PISCATAWAY, NJ, US LNKD-DOI:10.1109/TITS.2007.903444, vol. 8, no. 3, 1 septembre 2007 (2007-09-01), pages 413-430, XP011191504 ISSN: 1524-9050 * le document en entier * ----- -/-- | 1-17 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 26 juillet 2010 | Grigorescu, Cosmin |

Europäisches
Patentamt

European
Patent Office

Office européen
des brevets

**RAPPORT DE RECHERCHE EUROPEENNE**

Numéro de la demande

EP 10 16 8478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHENJIANG LI ET AL: "A Review on Vision-Based Pedestrian Detection for Intelligent Vehicles" VEHICULAR ELECTRONICS AND SAFETY, 2006. ICVES 2006. IEEE INTERNATIONAL CONFERENCE ON, IEEE, PI, 1 décembre 2006 (2006-12-01), pages 57-62, XP031177228 ISBN: 978-1-4244-0758-3 * le document en entier * ----- | 1-17 | |
| A | JUNFENG GE ET AL: "Real-Time Pedestrian Detection and Tracking at Nighttime for Driver-Assistance Systems" IEEE TRANSACTIONS ON INTELLIGENT TRANSPORTATION SYSTEMS, IEEE SERVICE CENTER, PISCATAWAY, NJ, US, vol. 10, no. 2, 1 juin 2009 (2009-06-01), pages 283-298, XP011256982 ISSN: 1524-9050 * le document en entier * ----- | 1-17 | |
| A | MASSIMO BERTOZZI ET AL: "Artificial Vision in Road Vehicles" PROCEEDINGS OF THE IEEE, IEEE. NEW YORK, US, vol. 90, no. 7, 1 juillet 2002 (2002-07-01), XP011065029 ISSN: 0018-9219 * page 1266, "C. Pedestrian Detection" * ----- | 1-17 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 26 juillet 2010 | Grigorescu, Cosmin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. Christogiannopoulos ; P. B. Birch ; R. C. D. Young ; C. R. Young.** Segmentation of moving objects from cluttered background scenes using a running average model. *SPIE Journal,* 2005, vol. 5822, 13-20

- **Corinna Cortes ; Vladimir Vapnik.** Support-Vector Machine. Kluwer Academic Publishers